# EUROPEAN PATENT APPLICATION

(11) **EP 4 661 557 A1**
(43) Date of publication of application: **10.12.2025**
(21) Application number: 23918968.1
(22) Date of filing: 30.01.2023
(51) Int. Cl.: H04W 72/232

(54) **BEAM INDICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/073896
(87) International publication number: WO 2024/159378

(57) **Abstract**

The present disclosure relates to a beam indication method, apparatus and device, and a storage medium. The method comprises: receiving beam indication information, the beam indication information being used for indicating a unified TCI state of a terminal, and the unified TCI state comprising N sets of TCI states, wherein N is a positive integer; and determining a default TCI state for physical shared channel transmission, the default TCI state being one or more sets of the N sets of TCI states. According to the present disclosure, one or more sets of TCI states are determined as default TCI states from a plurality of sets of TCI states indicated by beam indication information, and channel and/or signal transmission is performed on the basis of the default TCI states, thereby improving the reliability of the channel and/or signal transmission based on the TCI states.

## Description

### TECHNICAL FIELD

The present disclosure relates to the technical field of communication, and in particular, to a beam indication method and apparatus, a device and a storage medium.

### BACKGROUND

In new radio (NR), especially when the communication frequency band is in frequency range 2, due to the rapid attenuation of high-frequency channels, beam-based transmission and reception are required to ensure coverage.

In the conventional methods, the beams used for the transmission of the physical downlink control channel (PDCCH) and/or the demodulation reference signal (DMRS) of the PDCCH, the physical downlink shared channel (PDSCH) and/or the DMRS of the PDSCH, the physical uplink control channel (PUCCH) and/or the DMRS of the PUCCH, the physical uplink shared channel (PUSCH) and/or the DMRS of the PUSCH, and/or reference signals are all indicated independently. The reference signal may include a channel state information reference signal (CSI-RS), a sounding reference signal (SRS), a positioning reference signal (PRS), a time-frequency tracking reference signal (TRS), etc. For example, the CSI-RS may include a CSI-RS for channel state information measurement, a CSI-RS for beam measurement, or a CSI-RS for path loss estimation. The SRS may include an SRS for codebook-based or non-codebook-based channel state information measurement, an SRS for beam measurement, or an SRS for positioning measurement.

Typically, in the conventional methods, for the transmission of the DMRS of the PDCCH and/or PDCCH, as well as the transmission of the DMRS of the PUCCH and/or PUCCH, corresponding beams are respectively activated through the medium access control control element (MAC CE). For the transmission of the DMRS of the PDSCH and/or PDSCH, as well as the transmission of the DMRS of the PUSCH and/or PUSCH, corresponding beams are respectively indicated by the downlink control information (DCI) signaling. The beams may be indicated by TCI state or spatial relation information (spatialrelationinfo).

In some technologies, in order to reduce signaling overhead, a unified transmission configuration indication (TCI) state is proposed. When there are multiple (multi) transmission and receiving points (TRPs) providing transmission services for the terminal, multiple sets of TCI states may be configured accordingly. In this case, the terminal cannot determine which set of TCI states should be selected from the multiple sets of TCI states for communication.

### SUMMARY

In order to overcome the problems existing in the related art, the present disclosure provides a beam indication method and apparatus, a device and a storage medium.

According to a first aspect of the embodiments of the present disclosure, a beam indication method is provided, which is executed by a terminal, and the method includes: receiving beam indication information, where the beam indication information is used to indicate a unified transmission configuration indication (TCI) state of the terminal, where the unified TCI state includes N sets of TCI states, where N is a positive integer; and determining a default TCI state for physical shared channel transmission, where the default TCI state is one or more sets of TCI states of the N sets of TCI states.

According to a second aspect of the embodiments of the present disclosure, a beam indication method is provided, which is executed by a network device, and the method includes: sending beam indication information, where the beam indication information is used to indicate a unified transmission configuration indication (TCI) state of a terminal, where the unified TCI state includes N sets of TCI states, where N is a positive integer; and determining a default TCI state for physical shared channel transmission, where the default TCI state is one or more sets of TCI states of the N sets of TCI states.

According to a third aspect of the embodiments of the present disclosure, a beam indication apparatus is provided, and the apparatus includes: a receiving module, configured to receive beam indication information, where the beam indication information is used to indicate a unified transmission configuration indication (TCI) state of a terminal, where the unified TCI state includes N sets of TCI states, where N is a positive integer; and a processing module, configured to determine a default TCI state for physical shared channel transmission, where the default TCI state is one or more sets of TCI states of the N sets of TCI states.

According to a fourth aspect of the embodiments of the present disclosure, a beam indication apparatus is provided, and the apparatus includes: a sending module, configured to send beam indication information, where the beam indication information is used to indicate a unified transmission configuration indication (TCI) state of a terminal, where the unified TCI state includes N sets of TCI states, where N is a positive integer; and a processing module, configured to determine a default TCI state for physical shared channel transmission, where the default TCI state is one or more sets of TCI states of the N sets of TCI states.

According to a fifth aspect of the embodiments of the present disclosure, a beam indication device is provided, including: a processor; a memory for storing processor-executable instructions; where the processor is configured to execute the first aspect and any one of the methods in the first aspect.

According to a sixth aspect of the embodiments of the present disclosure, a beam indication device is provided, including: a processor; a memory for storing processor-executable instructions; where the processor is configured to execute the second aspect and any one of the methods in the second aspect.

According to a seventh aspect of the embodiments of the present disclosure, a non-transitory computer-readable storage medium is provided, and instructions in the storage medium, when executed by a processor of a terminal, cause the terminal to execute the first aspect and any one of the methods in the first aspect.

According to an eighth aspect of the embodiments of the present disclosure, a non-transitory computer-readable storage medium is provided, and instructions in the storage medium, when executed by a processor of a network device, cause the network device to execute the second aspect and any one of the methods in the second aspect.

The technical solutions provided by the embodiments of the present disclosure may include the following beneficial effects. By determining one or more sets of TCI states as the default TCI state from multiple sets of TCI states indicated by beam indication information, and transmitting channels and/or signals based on the default TCI state, the transmission reliability of channels and/or signals based on the TCI state is improved.

It is to be understood that the foregoing general description and the following detailed description are exemplary and explanatory only, and do not limit the present disclosure.

### BRIEF DESCRIPTION OF THE DRAWINGS

The accompanying drawings herein, which are incorporated in and constitute a part of the specification, illustrate embodiments consistent with the present disclosure and are used in conjunction with the specification to explain principles of the present disclosure.
FIG. 1 is a schematic diagram of a wireless communication system shown according to an exemplary embodiment.
FIG. 2 is a flow chart of a beam indication method shown according to an exemplary embodiment.
FIG. 3 is a flow chart of another beam indication method shown according to an exemplary embodiment.
FIG. 4 is a schematic diagram of a beam indication apparatus shown according to an exemplary embodiment.
FIG. 5 is a schematic diagram of another beam indication apparatus shown according to an exemplary embodiment.
FIG. 6 is a schematic diagram of a beam indication device shown according to an exemplary embodiment.
FIG. 7 is a schematic diagram of another beam indication device shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure.

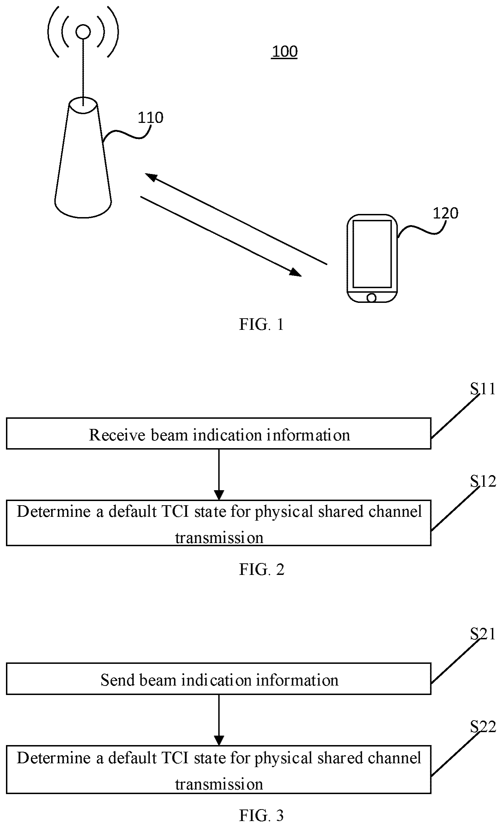

The communication method involved in the present disclosure may be applied to the wireless communication system 100 shown in FIG. 1. The network system may include a network device 110 and a terminal 120. It may be understood that the wireless communication system shown in FIG. 1 is only for schematic illustration, and the wireless communication system may further include other network devices, such as a core network device, a wireless relay device and a wireless backhaul device, which are not drawn in FIG. 1. The quantity of the network devices and the quantity of the terminals included in the wireless communication system are not limited in the embodiments of the present disclosure.

It can be further understood that the wireless communication system in the embodiments of the present disclosure is a network that provides wireless communication functions. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. According to capacities, speeds, delays and other factors of different networks, the networks may be divided into a 2nd generation (2G) network, a 3rd generation (3G) network, a 4th generation (4G) network, or a future evolved network, such as a 5th generation (5G) wireless communication system network, and the 5G network may also be referred to as new radio (NR). For convenience of description, the wireless communication network may be referred to as network for short sometimes in the present disclosure.

Further, the network device 110 involved in the disclosure may also be referred to as radio access network device. The radio access network device may be a base station, an evolved node B (eNB), a home base station, an access point (AP) in a wireless fidelity (WIFI) system, a wireless relay node, a wireless backhaul node, a transmission point (TP) or a transmission and reception point (TRP), etc., or a generation node B (gNB) in an NR system, or an assembly or part of devices, etc. that constitute a base station. In addition, in a case of a vehicle-to-everything (V2X) communication system, the network device may be a vehicle-mounted device. It should be understood that in the embodiments of the present disclosure, specific technologies and specific device forms used for the network device are not limited.

Further, the terminal 120 involved in the disclosure may also be referred to as terminal device, user equipment (UE), mobile station (MS), mobile terminal (MT), etc., which is a device that provides voice and/or data connectivity for a user. For instance, the terminal may be a handheld device, a vehicle-mounted device, etc. having a wireless connection function. At present, some instances of the terminal include a mobile phone, a pocket personal computer (PPC), a palm computer, a personal digital assistant (PDA), a laptop computer, a tablet computer, a wearable device, and a vehicle-mounted device. In addition, in a case of a vehicle-to-everything (V2X) communication system, the terminal device may be a vehicle-mounted device. It should be understood that in the embodiments of the present disclosure, specific technologies and specific device forms used for the terminal are not limited.

In the embodiments of the present disclosure, the network device 110 and the terminal 120 may adopt any feasible wireless communication technology to achieve mutual data transmission. The transmission channel corresponding to the data sent by the network device 110 to the terminal 120 is referred to as a downlink channel (downlink, DL), and the transmission channel corresponding to the data sent by the terminal 120 to the network device 110 is referred to as an uplink channel (uplink, UL). It can be understood that the network device involved in the embodiments of the present disclosure may be a base station. Of course, the network device may also be any other possible network device, and the terminal may be any possible terminal, which is not limited by the present disclosure.

In NR, especially when the communication frequency band is in frequency range 2, since high-frequency channels attenuate rapidly, it is necessary to use beam-based transmission and reception to ensure coverage range.

In Release 16 (Rel-16), the beams used for the transmission of the PDCCH and/or the DMRS of the PDCCH, the PDSCH and/or the DMRS of the PDSCH, the PUCCH and/or the DMRS of the PUCCH, the PUSCH and/or the DMRS of the PUSCH, and/or reference signals are all indicated independently. The reference signal may include a CSI-RS, an SRS, a PRS, a TRS, etc. For example, the CSI-RS may include a CSI-RS for channel state information measurement, a CSI-RS for beam measurement, or a CSI-RS for path loss estimation. The SRS may include an SRS for codebook-based or non-codebook-based channel state information measurement, an SRS for beam measurement, or an SRS for positioning measurement.

Typically, in the conventional methods, for the transmission of the PDCCH and/or the DMRS of the PDCCH, as well as the transmission of the PUCCH and/or the DMRS of the PUCCH, a beam is activated by the MAC CE. For the transmission of the PDSCH and/or the DMRS of the PDSCH, as well as the transmission of the PUSCH and/or the DMRS of the PUSCH, corresponding beams are respectively indicated by the DCI signaling.

In order to reduce signaling overhead, Rel-17 proposed the adoption of a unified TCI state. Currently, the unified TCI state may be indicated separately for uplink and downlink, such as a DL TCI state and a UL TCI state. The unified TCI state may also be indicated jointly for both uplink and downlink, such as the joint TCI state. For example, if the network device indicates a DL TCI state for the downlink, then the DL TCI state may be used for the transmission of the terminal's PDSCH and/or DMRS of the PDSCH, PDCCH and/or DMRS of the PDCCH, and at least a portion of the CSI-RS. The at least a portion of the CSI-RS may be an aperiodic CSI-RS. For another example, if the network device indicates a UL TCI state, then the UL TCI state may be used for the transmission of the terminal's PUSCH and/or DMRS of the PUSCH, PUCCH and/or DMRS of the PUCCH, and at least a portion of the SRS. For yet another example, if the network device indicates a joint TCI state, the joint TCI state may be used for transmission of both uplink and downlink channels and/or reference signals at the same time.

It can be understood that the TCI state may be used to indicate which receiving beams the terminal uses when receiving the PDCCH and/or the DMRS of the PDCCH, and/or the PDSCH and/or the DMRS of the PDSCH. For example, it indicates a receiving beam that corresponds to a transmitting beam which is the same as that of a synchronization signal and physical broadcast channel block (SSB) or CSI-RS received by the terminal from the network device. That is, the PDCCH and/or the DMRS of the PDCCH, and/or the PDSCH and/or the DMRS of the PDSCH are quasi-colocated with the SSB or CSI-RS. The TCI may also be used to indicate which transmitting beams the terminal uses when sending the PUCCH and/or the DMRS of the PUCCH, and/or the PUSCH and/or the DMRS of the PUSCH. For example, it indicates a transmitting beam corresponding to a receiving beam that is the same as which SSB or CSI-RS sent by the network device that the terminal receives, or a transmitting beam that is the same as which SRS sent by the terminal. That is, the PUCCH and/or the DMRS of the PUCCH, and/or the PUSCH and/or the DMRS of the PUSCH are quasi-colocated with the SSB, CSI-RS or SRS. Herein, the beam refers to the quasi-colocation (QCL) type D.

The beams involved above may be indicated by TCI states or spatialrelationinfo. The TCI state corresponding to PDCCH includes the TCI state corresponding to PDCCH and/or DMRS of PDCCH, that is, the TCI state is used for the reception of the PDCCH and/or the DMRS of the PDCCH. Similarly, the TCI state corresponding to PDSCH includes the TCI state corresponding to the PDSCH and/or DMRS of PDSCH, that is, the TCI state is used for the reception of the PDSCH and/or DMRS of PDSCH. The TCI state or spatialrelationinfo corresponding to PUCCH includes the TCI state or spatialrelationinfo corresponding to PUCCH and/or DMRS of PUCCH, that is, the TCI state or spatialrelationinfo is used for the transmission of PUCCH and/or DMRS of PUCCH. The TCI state or spatialrelationinfo corresponding to PUSCH includes the TCI state or spatialrelationinfo corresponding to PUSCH and/or DMRS of PUSCH, that is, the TCI state or spatialrelationinfo is used for the transmission of PUSCH and/or DMRS of PUSCH.

However, at present, Rel-17 only considers a unified TCI state for single-TRP. That is, only one set of unified TCI states is considered to be configured for beam indication. For example, it may include the UL TCI state, the DL TCI state and/or a joint TCI state. When there are multiple TRPs (multi-TRP) providing transmission services for the terminal, multiple sets of TCI states may be configured correspondingly. In this case, how to indicate multiple sets of unified TCI states has not yet been determined.

For the case of multi-TRP, there is a single DCI method. Among the corresponding PDCCH and/or DMRS of PDCCH, PDSCH and/or DMRS of PDSCH, PUCCH and/or DMRS of PUCCH, as well as PUSCH and/or DMRS of PUSCH, if some of the channels and/or the DMRS thereof are configured with multi-TRP while another part of the channels and/or the DMRS thereof are configured with single-TRP, then when the unified TCI state indicates multiple sets of TCI states, dynamic switching between multi-TRP and single-TRP may be required for the channels configured with multi-TRP. In such cases, additional signaling is needed to indicate which one or more sets of TCI states correspond to each channel among the multiple sets of TCI states.

In the related scheme, for PDCCH, radio resource control (RRC) signaling is used to determine which one or more of the multiple TCI states each control resource set (CORESET) or CORESET group is based on for PDCCH reception. And for PUCCH, it is also determined, based on RRC signaling, which one or more sets of TCI states each PUCCH or PUCCH group is based on for PUCCH transmission. For PDSCH, it is determined, based on the first indication field of the PDSCH in the DCI, which one or more sets of TCI states each PDSCH is based on for PDSCH reception. For PUSCH, it is determined, based on the second indication field of the PUSCH in the DCI, which one or more sets of TCI states each PUSCH is based on for PUSCH transmission.

However, for both PDSCH and PUSCH, indication is made based on the indication field of DCI. In a case that a terminal is unable to obtain the corresponding indication information based on the indication field of DCI, there is currently no established conclusion on how the terminal determines which one or more sets of TCI states to use for the reception and transmission of the corresponding channels and/or signals.

Therefore, the present disclosure provides a beam indication method and apparatus, a device and a storage medium. By determining one or more sets of TCI states as a default TCI state from multiple sets of TCI states indicated by beam indication information, and transmitting channels and/or signals based on the default TCI state, the transmission reliability of channels and/or signals based on the TCI states is improved.

FIG. 2 is a flow chart of a beam indication method shown according to an exemplary embodiment. As shown in FIG. 2, the method is executed by a terminal and may include the following steps.

In step S11, beam indication information is received.

In some embodiments, the terminal may receive beam indication information. For example, the terminal receives beam indication information sent by a network device. The beam indication information is used to indicate a unified TCI state of the terminal, i.e., the unified TCI state or the indicated TCI state. The unified TCI state includes N sets of TCI states, where N is a positive integer.

It can be understood that the unified TCI state may be used for the corresponding TCI states for the transmission of at least two items among channels and/or corresponding DMRS thereof, such as PDCCH and/or DMRS of PDCCH, PDSCH and/or DMRS of PDSCH, PUCCH and/or DMRS of PUCCH, PUSCH and/or DMRS of PUSCH, etc., as well as signals, such as SRS, CSI-RS, TRS, etc.

In some cases, N may be a positive integer greater than 1 or greater than 2.

In step S12, a default TCI state for physical shared channel transmission is determined.

In some embodiments, the terminal determines the default TCI state for the physical shared channel, where the default TCI state is one or more sets of TCI states of the N sets of TCI states.

For example, the terminal may determine the default TCI state used for receiving the PDSCH and/or transmitting the PUSCH based on N sets of TCI states. The default TCI state is one or more sets of the N sets of TCI states.

It can be understood that the terminal may perform PDSCH reception and/or PUSCH transmission based on the determined default TCI state.

The present disclosure improves the reliability of transmission of channels and/or signals based on TCI states by determining one or more sets of TCI states as the default TCI state from multiple sets of TCI states indicated by beam indication information, and performing transmission of channels and/or signals based on the default TCI state.

In the beam indication method provided by the embodiments of the present disclosure, determining the default TCI state for the physical shared channel transmission in S12 may include: determining the default TCI state based on a transmission mode of a physical channel.

In some embodiments, the terminal may determine a corresponding default TCI state based on the transmission mode of the physical channel.

For example, the terminal may determine the corresponding default TCI state based on the transmission mode of PDSCH and/or PUSCH, or based on the transmission mode of PDCCH, so that the terminal receives PDSCH and/or sends PUSCH based on the determined default TCI state.

The transmission modes of the physical channel may include multiple types, for example, a transmission mode related to frequency division multiplexing (FDM), a transmission mode related to time division multiplexing (TDM), a transmission mode related to space division multiplexing (SDM), a transmission mode related to a single frequency network (SFN), etc., which is not limited in the present disclosure.

The present disclosure may determine a suitable default TCI state according to the transmission mode of the physical channel, so as to transmit the channels and/or signals based on the default TCI state, thereby improving the reliability of transmission of the channels and/or signals based on the TCI state.

In the beam indication method provided by the embodiments of the present disclosure, in response to a transmission mode of the physical shared channel being a specified transmission mode, the default TCI state is multiple sets of TCI states of the N sets of TCI states; or, based on a situation of a configuration of a specified parameter for the physical shared channel, the default TCI state is one or more sets of TCI states of the N sets of TCI states.

In some embodiments, in response to the transmission mode of the physical shared channel being a specified transmission mode, the default TCI state is multiple sets of TCI states of the N sets of TCI states.

It can be understood that the physical shared channel mentioned in various embodiments of the present disclosure may include PDSCH and/or PUSCH.

For example, if N is 2, in response to the transmission mode of the physical shared channel being the specified transmission mode, the default TCI state directly includes 2 sets of TCI states. Of course, if N is more, the default TCI state may directly include all or part of the N sets of TCI states. Specifically, which part of the N sets of TCI states is included in the default TCI state may be preset by the protocol or determined based on the default rule, which is not limited by the present disclosure.

In some embodiments, in response to the transmission mode of the physical shared channel being a specified transmission mode, based on the situation of the configuration of a specified parameter for the physical shared channel, the default TCI state is one or more sets of TCI states of the N sets of TCI states.

For example, the terminal may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, a parameter for enabling two or more sets of default TCI states (an enabletwoDefaultTClstate parameter). For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

It can be understood that the specified transmission mode may be part of the preset transmission modes of the physical channel, for example, an FDM-related transmission mode, a TDM-related transmission mode, etc.

The present disclosure determines a suitable default TCI state in the case that the transmission mode of the physical shared channel is a specified transmission mode, so as to transmit the channels and/or signals based on the default TCI state, thereby improving the reliability of transmission of the channels and/or signals based on the TCI states.

In the beam indication method provided by the embodiments of the present disclosure, in response to a transmission mode of the physical shared channel being a non-specified transmission mode; the default TCI state is one set of TCI states of the N sets of TCI states; or, based on a situation of a configuration of a specified parameter for the physical shared channel, the default TCI state is one or more sets of TCI states of the N sets of TCI states.

In some embodiments, in response to the transmission mode of the physical shared channel being the non-specified transmission mode, the default TCI state is one set of TCI states of the N sets of TCI states.

It can be understood that the non-specified transmission mode is a transmission mode other than the specified transmission mode, or it can also be understood that the physical shared channel is not configured with the specified transmission mode.

In some embodiments, in response to the transmission mode of the physical shared channel being the non-specified transmission mode, based on the situation of the configuration of the specified parameter for the physical shared channel, the default TCI state is one or more sets of TCI states of the N sets of TCI states.

For example, the terminal may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if the enabletwoDefaultTClstate is not configured, the default TCI state is one set of TCI states of the N sets of TCI states.

The present disclosure determines a suitable default TCI state in the case that the transmission mode of the physical shared channel is a non-specified transmission mode, so as to transmit the channels and/or signals based on the default TCI state, thereby improving the reliability of transmission of the channels and/or signals based on the TCI states.

In the beam indication method provided by the embodiments of the present disclosure, in response to the transmission mode of the physical shared channel being an SFN scheme, it may include at least one of the following: in response to the terminal not supporting a dynamic SFN scheme, the default TCI state being multiple sets of TCI states of the N sets of TCI states; in response to the terminal supporting the dynamic SFN scheme, based on the situation of the configuration of the specified parameter for the physical shared channel, the default TCI state being one or more sets of TCI states of the N sets of TCI states.

In some embodiments, in response to the transmission mode of the physical shared channel being the SFN scheme, and in the case that the terminal does not support the dynamic SFN scheme, the default TCI state may be multiple sets of TCI states in the N sets of TCI states. The inability to support dynamic SFN scheme can be understood as the dynamic switching between the SFN scheme and single TRP transmission being not supported by the terminal. That is, if the terminal configures the physical shared channel as the SFN transmission scheme, the physical shared channel cannot be dynamically switched from SFN transmission to single TRP transmission. It can be understood that the SFN transmission scheme is based on multiple sets of TCI states for transmission, while single TRP is based on a single set of TCI states for transmission.

For example, the physical shared channel is configured with the SFN scheme for transmission, and the terminal does not support the dynamic SFN scheme. It can be determined that the default TCI state directly includes multiple sets of TCI states in the N sets of TCI states. For example, the default TCI state may directly include all or part of the N sets of TCI states. For example, the default TCI state may directly include 2 sets of TCI states.

In some embodiments, in response to the transmission mode of the physical shared channel being the SFN scheme and the terminal supporting the dynamic SFN scheme, the default TCI state may be determined to be one or more sets of TCI states of the N sets of TCI states based on the situation of the configuration of the specified parameter for the physical shared channel.

For example, the physical shared channel is configured with the SFN scheme for transmission, and the terminal supports the dynamic SFN scheme. The terminal may determine that the default TCI state is one or more sets of TCI states of the N sets of TCI states based on the situation of the configuration of the specified parameter for the physical shared channel.

For example, the terminal may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

In some embodiments, in response to the transmission mode of the physical shared channel being the SFN scheme, the default TCI state may be multiple sets of TCI states of the N sets of TCI states when the terminal does not support the dynamic SFN scheme; and, based on the situation of the configuration of the specified parameter for the physical shared channel, the default TCI state is one or more sets of TCI states of the N sets of TCI states when the terminal supports the dynamic SFN scheme.

The present disclosure determines a suitable default TCI state in the case that the transmission mode of the physical shared channel is the SFN scheme, so as to transmit the channels and/or signals based on the default TCI state, thereby improving the reliability of transmission of the channels and/or signals based on the TCI states.

In the beam indication method provided by the embodiments of the present disclosure, in response to the transmission mode of a PDCCH being an SFN scheme, it may include at least one of the following: in response to the terminal not supporting a dynamic SFN scheme, the default TCI state being multiple sets of TCI states of the N sets of TCI states; and in response to the terminal supporting the dynamic SFN scheme, based on a transmission mode of the physical shared channel, determining that the default TCI state is one or more sets of TCI states of the N sets of TCI states.

In some embodiments, in response to the transmission mode of the PDCCH being the SFN scheme, and in the case that the terminal does not support the dynamic SFN scheme, the default TCI state may be multiple sets of TCI states of the N sets of TCI states.

For example, the PDCCH is configured with the SFN scheme for transmission, and the terminal does not support a dynamic SFN scheme. It can be determined that the default TCI state directly includes multiple sets of TCI states in the N sets of TCI states. For example, the default TCI state may directly include all or part of the N sets of TCI states. For example, the default TCI state may directly include 2 sets of TCI states.

It can be understood that in this case, PDSCH and/or PUSCH must be configured with a transmission mode based on multiple sets of TCIs, such as any one of the multiple different transmission modes included in the specified transmission modes.

In some embodiments, in response to the transmission mode of the PDCCH being the SFN scheme and in the case that the terminal supports the dynamic SFN scheme, the terminal may determine that the default TCI state is one or more sets of TCI states of the N sets of TCI states based on the transmission mode of the physical shared channel.

For example, the PDCCH is configured with an SFN scheme for transmission, and the terminal supports the dynamic SFN scheme. The terminal may determine that the default TCI state is one or more sets of TCI states of the N sets of TCI states based on the transmission mode of the PDSCH and/or PUSCH.

For example, the terminal may determine that the default TCI state is one set of TCI states of the N sets of TCI states, or determine that the default TCI state is multiple sets of TCI states of the N sets of TCI states, according to whether some specified transmission modes are configured for PDSCH and/or PUSCH.

In some embodiments, in response to the transmission mode of the PDCCH being the SFN scheme, the default TCI state may be multiple sets of TCI states of the N sets of TCI states when the terminal does not support the dynamic SFN scheme; and, based on the transmission mode of the physical shared channel, the default TCI state is determined to be one or more sets of TCI states of the N sets of TCI states when the terminal supports the dynamic SFN scheme.

The present disclosure determines a suitable default TCI state in the case that the transmission mode of the PDCCH is the SFN scheme, so as to transmit the channels and/or signals based on the default TCI state, thereby improving the reliability of transmission of the channels and/or signals based on the TCI states.

In the beam indication method provided by the embodiments of the present disclosure, the method may further include: receiving an RRC signaling, where the RRC signaling indicates that any CORESET corresponds to multiple sets of TCI states of the N sets of TCI states.

In some embodiments, the terminal may further receive RRC signaling sent by the network device. The RRC signaling may be used to indicate that any CORESET corresponds to multiple sets of TCI states in the N sets of TCI states. The multiple sets of TCI states may be all or part of the N sets of TCI states.

For example, RRC signaling indicates that a certain CORESET corresponds to transmission based on multiple sets of TCI states of the N sets of TCI states, such as 2 sets of TCI states. Then, for the default beam for the PDSCH and/or PUSCH scheduled or triggered by the DCI on the PDCCH within the CORESET, the default TCI state may be determined as one or more sets of TCI states in the N sets of TCI states according to whether the terminal supports the SFN scheme.

It can be understood that the transmission mode of the PDCCH may be an SFN scheme, that is, the PDCCH is configured with the transmission mode of the SFN scheme.

The present disclosure determines a suitable default TCI state in the case that the RRC indicates the presence of a CORESET corresponding to multiple sets of TCI states of the N sets of TCI states, so as to transmit the channels and/or signals based on the default TCI state, thereby improving the reliability of transmission of the channels and/or signals based on the TCI states.

In the beam indication method provided by the embodiments of the present disclosure, in response to the transmission mode of the PDCCH being the SFN scheme, it may include at least one of the following: in response to the terminal not supporting the dynamic SFN scheme, the default TCI state being one set of TCI states of the N sets of TCI states; and in response to the terminal supporting the dynamic SFN scheme, based on a transmission mode of the physical shared channel, determining that the default TCI state is one or more sets of TCI states among the N sets of TCI states.

In some embodiments, in response to the transmission mode of the PDCCH being the SFN scheme, and the terminal not supporting the dynamic SFN scheme, the default TCI state may be one set of TCI states of the N sets of TCI states.

For example, the PDCCH is configured with the SFN scheme for transmission, and the terminal does not support the dynamic SFN scheme. It can be determined that the default TCI state directly includes one set of TCI states of the N sets of TCI states.

It can be understood that in this case, PDSCH and/or PUSCH are not allowed to be configured with transmission modes based on multiple sets of TCIs, for example, PDSCH and/or PUSCH are not allowed to be configured with any one of multiple different transmission modes of the specified transmission modes.

In some embodiments, in response to the transmission mode of PDCCH being the SFN scheme and in the case that the terminal supports the dynamic SFN scheme, the terminal may determine that the default TCI state is one or more sets of TCI states of the N sets of TCI states based on the transmission mode of the physical shared channel.

For example, the PDCCH is configured with the SFN scheme for transmission, and the terminal supports a dynamic SFN scheme. The terminal may determine that the default TCI state is one or more sets of TCI states of the N sets of TCI states based on the transmission mode of the PDSCH and/or PUSCH.

For example, the terminal may determine that the default TCI state is one set of TCI states of the N sets of TCI states, or determine that the default TCI state is multiple sets of TCI states of the N sets of TCI states, according to whether some specified transmission modes are configured for PDSCH and/or PUSCH.

In some embodiments, in response to the transmission mode of the PDCCH (PDCCH transmission scheme) being the SFN scheme, when the terminal does not support the dynamic SFN scheme, the default TCI state may be one set of TCI states of the N sets of TCI states; and, when the terminal supporting the dynamic SFN scheme, the default TCI state is determined as one or more sets of TCI states of the N sets of TCI states based on the transmission mode of the physical shared channel.

The present disclosure determines a suitable default TCI state in the case that the transmission mode of the PDCCH is the SFN scheme, so as to transmit channels and/or signals based on the default TCI state, thereby improving the reliability of transmission of channels and/or signals based on the TCI state.

In the beam indication method provided by the embodiments of the present disclosure, the method may further include: receiving an RRC signaling, where the RRC signaling indicates that any CORESET corresponds to one set of TCI states of the N sets of TCI states.

In some embodiments, the terminal may further receive RRC signaling sent by the network device. The RRC signaling may be used to indicate that any CORESET corresponds to one set of TCI states of the N sets of TCI states.

For example, RRC signaling indicates that a certain CORESET corresponds to transmission based on one set of TCI states of the N sets of TCI states. Then, for the default beam for the PDSCH and/or PUSCH scheduled or triggered by the DCI on the PDCCH within the CORESET, the default TCI state may be determined as one or more sets of TCI states of the N sets of TCI states according to whether the terminal supports the SFN scheme.

It can be understood that the transmission mode of the PDCCH may be the SFN scheme, that is, the PDCCH is configured with the transmission mode of the SFN scheme.

The present disclosure determines a suitable default TCI state in the case that the RRC indicates the presence of a CORESET corresponding to one set of TCI states of the N sets of TCI states, so as to transmit channels and/or signals based on the default TCI state, thereby improving the reliability of transmission of channels and/or signals based on the TCI state.

In the beam indication method provided by the embodiments of the present disclosure, in response to the terminal supporting the dynamic SFN scheme and the transmission mode of the physical shared channel being the specified transmission mode; the default TCI state is one or more sets of TCI states of the N sets of TCI states; or, based on a situation of a configuration of a specified parameter for the physical shared channel, the default TCI state is one or more sets of TCI states of the N sets of TCI states.

In some embodiments, in response to the terminal supporting the dynamic SFN scheme and the transmission mode of the physical shared channel being the specified transmission mode, the default TCI state may be determined to be one or more sets of TCI states of the N sets of TCI states.

For example, the terminal supports the dynamic SFN scheme, and PDSCH and/or PUSCH are in specified transmission modes. It can be determined that the default TCI state directly includes one set of TCI states or multiple sets of TCI states of the N sets of TCI states. For example, the default TCI state may directly include all, part, or one set of the N sets of TCI states. For example, the default TCI state may directly include 2 sets of TCI states or 1 set of TCI states.

In some embodiments, in response to the terminal supporting the dynamic SFN scheme and the transmission mode of the physical shared channel being the specified transmission mode, the default TCI state may be determined to be one or more sets of TCI states of the N sets of TCI states based on the situation of the configuration of the specified parameter for the physical shared channel.

For example, the terminal supports the dynamic SFN scheme, and PDSCH and/or PUSCH are in specified transmission modes. The terminal may determine that the default TCI state is one or more sets of TCI states of the N sets of TCI states based on the situation of the configuration of the specified parameter for the physical shared channel.

For example, the terminal may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

The present disclosure determines a suitable default TCI state in the case that the terminal supports the dynamic SFN scheme and the transmission mode of the physical shared channel is a specified transmission mode, so as to transmit channels and/or signals based on the default TCI state, thereby improving the reliability of transmission of channels and/or signals based on the TCI state.

In the beam indication method provided by the embodiments of the present disclosure, in response to the terminal supporting the dynamic SFN scheme and the transmission mode of the physical shared channel being a non-specified transmission mode; the default TCI state is one set of TCI states of the N sets of TCI states; or, based on a situation of a configuration of a specified parameter for the physical shared channel, the default TCI state is one or more sets of TCI states of the N sets of TCI states.

In some embodiments, in response to the terminal supporting the dynamic SFN scheme and the transmission mode of the physical shared channel being the non-specified transmission mode, the default TCI state may be determined to be one set of TCI states of the N sets of TCI states.

For example, the terminal supports the dynamic SFN scheme, and PDSCH and/or PUSCH are in non-specified transmission modes. It can be determined that the default TCI state directly includes one set of TCI states of the N sets of TCI states.

In some embodiments, in response to the terminal supporting the dynamic SFN scheme and the transmission mode of the physical shared channel being the non-specified transmission mode, the default TCI state may be determined to be one or more sets of TCI states of the N sets of TCI states based on the situation of the configuration of the specified parameter for the physical shared channel.

For example, the terminal supports a dynamic SFN scheme, and PDSCH and/or PUSCH are in non-specified transmission modes. The terminal may determine that the default TCI state is one or more sets of TCI states of the N sets of TCI states based on the situation of the configuration of the specified parameter for the physical shared channel.

For example, the terminal may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states. The present disclosure determines a suitable default TCI state in the case that the terminal supports the dynamic SFN scheme and the transmission mode of the physical shared channel is a non-specified transmission mode, so as to transmit channels and/or signals based on the default TCI state, thereby improving the reliability of transmission of channels and/or signals based on the TCI state.

In the beam indication method provided by the embodiments of the present disclosure, the specified transmission mode may include at least one of the following: an FDM scheme; a TDM scheme; an SDM scheme; and an SFN scheme.

In some embodiments, the specified transmission mode may include an FDM scheme.

For example, the specified transmission mode may include an FDMschemeA and/or an FDMschemeB.

The FDMschemeA means that a same transport block (TB) is transmitted through different TCI states on different frequency domain resources but the same time domain resource.

The FDMschemeB means that the same TB is transmitted multiple times through different TCI states on different frequency domain resources but the same time domain resource.

In some embodiments, the specified transmission mode may include a TDM scheme.

For example, the specified transmission mode may include a TDMschemeA, and/or, a repetitionNumber in PDSCH/PUSCH-TimeDomainResourceAllocation.

The TDMschemeA means that the same TB is transmitted multiple times through different TCI states on the same frequency domain resource but different time domain resources, and the different time domain resources are in the same time slot.

The repetitionNumber in PDSCH/PUSCH-TimeDomainResourceAllocation indicates that the same TB is transmitted multiple times on the same frequency domain resource but different time domain resources through different TCI states, and different time domain resources are in different slots.

In some embodiments, the specified transmission mode may include an SDM scheme.

The SDM scheme means that the same TB is transmitted through different TCI states on DMRS ports of different code division multiplexing (CDM) groups with the same frequency domain resources and the same time domain resources.

In some embodiments, the specified transmission mode may include an SFN scheme.

For example, the specified transmission scheme may include an SFNschemeA and/or an SFNschemeB.

The SFNschemeA means that the same TB is transmitted through different TCI states on the same frequency domain resources, the same time domain resources, and the DMRS ports of the same CDM group, where the PDSCH/PUSCH has a quasi co-location (QCL) relationship with the parameters in both TCI states.

The SFNschemeB means that the same TB is transmitted through different TCI states on the same frequency domain resources and the same time domain resources, on the DMRS port of the same CDM group. Among the parameters in the two TCI states, the PDSCH/PUSCH has a QCL relationship with all parameters except for some parameters in the second TCI state, where the some parameters in the second TCI state may include doppler shift, doppler spread, etc.

In some embodiments, the specified transmission mode may include: an FDM scheme, a TDM scheme; an FDM scheme, an SDM scheme; an FDM scheme, an SFN scheme; a TDM scheme, an SDM scheme; a TDM scheme, an SFN scheme; an SDM scheme, an SFN scheme; an FDM scheme, a TDM scheme, an SDM scheme; an FDM scheme, a TDM scheme, an SFN scheme; an FDM scheme, an SDM scheme, an SFN scheme; a TDM scheme, an SDM scheme, an SFN scheme; an FDM scheme, a TDM scheme, an SDM scheme, and an SFN scheme.

The present disclosure provides multiple representations of the specified transmission modes to determine a suitable default TCI state in a corresponding situation, so as to transmit channels and/or signals based on the default TCI state, thereby improving the reliability of transmission of the channels and/or signals based on the TCI state.

In the beam indication method provided by the embodiments of the present disclosure, based on the situation of the configuration of the specified parameter for the physical shared channel, the default TCI state being one or more sets of TCI states of the N sets of TCI states, may include: in response to the physical shared channel being configured with the specified parameter, the default TCI state being multiple sets of TCI states of the N sets of TCI states; in response to the physical shared channel not being configured with the specified parameter, the default TCI state being one set of TCI states of the N sets of TCI states.

In some embodiments, in response to the physical shared channel being configured with the specified parameter, the default TCI state is multiple sets of TCI states of the N sets of TCI states.

For example, the PDSCH and/or PUSCH is configured with the specified parameter, such as configured with an enabletwoDefaultTClstate parameter, and the default TCI state may be determined to be multiple sets of TCI states of the N sets of TCI states.

For example, if N is 2, in response to the PDSCH and/or PUSCH being configured with the enableTwoDefaultTClstate parameter, the default TCI state directly includes 2 sets of TCI states. Of course, if N is more, the default TCI state may directly include all or part of the N sets of TCI states. Which specific part of the N sets of TCI states the default TCI state includes may be preset by the protocol or determined based on default rules, which is not limited in the present disclosure.

In some embodiments, in response to the physical shared channel not being configured with a specified parameter, the default TCI state is one set of TCI states of the N sets of TCI states.

For example, if the PDSCH and/or PUSCH is not configured with the specified parameter, e.g. the enabletwoDefaultTClstate parameter is not configured, it can be determined that the default TCI state is one set of TCI states of the N sets of TCI states.

The present disclosure can determine a suitable default TCI state according to different situations of the configuration of the specified parameter for the physical shared channel, so as to transmit channels and/or signals based on the default TCI state, thereby improving the reliability of transmission of channels and/or signals based on the TCI state.

In the beam indication method provided by the embodiments of the present disclosure, the one set of TCI states is the first set of TCI states in the unified TCI state.

In some embodiments, the one set of TCI states may be the first set of TCI states in the unified TCI state.

For example, the first set of TCI states may be a TCI state corresponding to the minimum TCI state identifier in the unified TCI state of the beam indication information. The identifier may be an identity (ID) identifier or an index.

For example, the first set of TCI states is the TCI state corresponding to the minimum TCI state ID.

For another example, the first set of TCI states may be the TCI state with the lowest bit position in the unified TCI state of the beam indication information.

For example, the first set of TCI states is the TCI state corresponding to the lowest bit position in the unified TCI state of the beam indication information.

The present disclosure provides a specific representation when the default TCI state is one set of TCI states, so as to transmit channels and/or signals based on the default TCI state, thereby improving the reliability of transmission of channels and/or signals based on the TCI state.

In the beam indication method provided by the embodiments of the present disclosure, the default TCI state is determined in response to at least one of the following conditions being met: a first DCI not including a correspondence indication field for indicating the physical shared channel and the N sets of TCI states; the physical shared channel being transmitted before the terminal receives a second DCI including the correspondence indication field; and the time offset between the third DCI and a PDSCH is less than an offset threshold, where the third DCI is a DCI for scheduling the PDSCH.

In some embodiments, when the first DCI does not include a correspondence indication field for indicating the physical shared channel and the N sets of TCI states, the terminal may determine the default TCI state.

For example, when the first DCI received by the terminal does not include a correspondence indication field for indicating the correspondence between PDSCH and/or PUSCH and the N sets of TCI states, since the first DCI received by the terminal does not include the correspondence indication field, the correspondence between the physical shared channel and the N sets of TCI states cannot be parsed. In this case, the terminal can determine the default TCI state so as to perform PDSCH and/or PUSCH transmission based on the default TCI state.

In some embodiments, when the physical shared channel is transmitted before the terminal receives the second DCI including the correspondence indication field, the terminal may determine the default TCI state.

For example, if the terminal needs to transmit PDSCH and/or PUSCH before receiving the second DCI that includes the correspondence indication field, the terminal cannot parse the correspondence between the physical shared channel and the N sets of TCI states since the terminal has not received the second DCI that includes the correspondence indication field. In this case, the terminal can determine the default TCI state so as to transmit PDSCH and/or PUSCH based on the default TCI state.

In some embodiments, when the time offset between the third DCI and the PDSCH is less than the offset threshold, the terminal may determine the default TCI state. The third DCI is the DCI that schedules the PDSCH.

For example, the terminal receives the third DCI, but the time offset between the third DCI and the PDSCH is less than the offset threshold, the terminal has not yet completed decoding the third DCI, and therefore cannot obtain the correspondence between the physical shared channel and the N sets of TCI states. In this case, the terminal can determine the default TCI state so that PDSCH and/or PUSCH transmission is performed based on the default TCI state. The duration or time period corresponding to the offset is mainly used for the terminal to decode the DCI.

It can be understood that in the various situations mentioned above, it can be considered that the terminal is unable to determine the correspondence between PDSCH and/or PUSCH and the N sets of TCI states based on the correspondence indication field of DCI.

In some embodiments, when the first DCI does not include a correspondence indication field for indicating the physical shared channel and the N sets of TCI states, and when the physical shared channel is transmitted before the terminal receives the second DCI that includes the correspondence indication field, the terminal may determine the default TCI state.

In some embodiments, when the first DCI does not include a correspondence indication field for indicating the physical shared channel and the N sets of TCI states, and when the time offset between the third DCI and the PDSCH is less than the offset threshold, the terminal may determine the default TCI state.

In some embodiments, when the physical shared channel is transmitted before the terminal receives the second DCI that includes the correspondence indication field, and when the time offset between the third DCI and the PDSCH is less than the offset threshold, the terminal may determine the default TCI state.

In some embodiments, when the first DCI does not include the correspondence indication field for indicating the physical shared channel and the N sets of TCI states, and when the physical shared channel is transmitted before the terminal receives the second DCI that includes the correspondence indication field, and when the time offset between the third DCI and the PDSCH is less than an offset threshold, the terminal may determine the default TCI state.

It should be understood that the first DCI, the second DCI and the third DCI mentioned above may be the same, partially the same or all different, which is not limited by the present disclosure.

The present disclosure can determine a suitable default TCI state when the terminal cannot determine the TCI state based on the DCI, so as to transmit channels and/or signals based on the default TCI state, thereby improving the reliability of transmission of channels and/or signals based on the TCI state.

In the beam indication method provided by the embodiments of the present disclosure, each set of TCI states may include: a joint TCI state; or at least one of an uplink UL TCI state and a downlink DL TCI state.

In some embodiments, each set of TCI states may include a joint TCI state.

In some embodiments, each set of TCI states may include a UL TCI state and/or a DL TCI state.

The present disclosure can adapt to different scenarios of unified TCI state indication, and can transmit channels and/or signals based on the default TCI state, thereby improving the reliability of transmission of channels and/or signals based on the TCI state.

In the beam indication method provided by the embodiments of the present disclosure, the beam indication information is carried by a MAC CE, and the MAC CE is used to indicate the N sets of TCI states, and the N sets of TCI states correspond to one codepoint in a TCI indication field in the fourth DCI.

In some embodiments, the beam indication information may be carried by the MAC CE. The MAC CE may be used to indicate the N sets of TCI states. The N sets of TCI states may correspond to one codepoint in the TCI indication field in the fourth DCI. In this case, the TCI indication field in the fourth DCI is not required to further indicate the codepoint.

The present disclosure provides a method of carrying beam indication information through the MAC CE to indicate the N sets of TCI states, so as to determine a suitable default TCI state from the N sets of TCI states, so that channels and/or signals are transmitted based on the default TCI state, thereby improving the reliability of transmission of channels and/or signals based on the TCI state.

In the beam indication method provided by the embodiments of the present disclosure, the beam indication information is carried by a MAC CE and a fifth DCI, the MAC CE is used to indicate the N sets of TCI states respectively corresponding to multiple codepoints in the TCI indication field in the fifth DCI, and the TCI indication field in the fifth DCI is used to indicate one codepoint of the multiple codepoints.

In some embodiments, the beam indication information may be carried by the MAC CE and the fifth DCI. The MAC CE may be used to indicate multiple N sets of TCI states. It can be understood that each N set of TCI states corresponds to one codepoint. In other words, the MAC CE indicates the N sets of TCI states respectively corresponding to the multiple codepoints. The TCI indication field in the fifth DCI is used to indicate one codepoint of the multiple codepoints, so as to further indicate a specific group of N sets of TCI states from the multiple groups of N sets of TCI states.

It can be understood that in the N sets of TCI states respectively corresponding to the multiple codepoints, the value of N may be the same or different.

The present disclosure provides a method of carrying beam indication information through the MAC CE and the DCI to indicate the N sets of TCI states, so as to determine a suitable default TCI state from the N sets of TCI states, so that channels and/or signals are transmitted based on the default TCI state, thereby improving the reliability of transmission of channels and/or signals based on the TCI state.

Based on the same concept, the present disclosure also provides a beam indication method performed on a network device side.

FIG. 3 is a flow chart of another beam indication method shown according to an exemplary embodiment. As shown in FIG. 3, the method is executed by a network device and may include the following steps.

In step S21, beam indication information is sent.

In some embodiments, the network device may send beam indication information. For example, the network device sends beam indication information to a terminal. The beam indication information is used to indicate a unified TCI state of the terminal, i.e., the unified TCI state or the indicated TCI state. The unified TCI state includes the N sets of TCI states, where N is a positive integer.

It can be understood that the unified TCI state may be used for the corresponding TCI states for the transmission of at least two items among channels and/or corresponding DMRS thereof, such as the PDCCH and/or the DMRS of PDCCH, the PDSCH and/or the DMRS of PDSCH, the PUCCH and/or the DMRS of PUCCH, the PUSCH and/or the DMRS of PUSCH, etc., as well as signals, such as the SRS, the CSI-RS, the TRS, etc.

In some cases, N may be a positive integer greater than 1 or greater than 2.

In step S22, a default TCI state for physical shared channel transmission is determined.

In some embodiments, the network device determines the default TCI state for the physical shared channel, where the default TCI state is one or more sets of TCI states of the N sets of TCI states.

For example, the network device may determine the default TCI state used for transmitting the PDSCH and/or receiving the PUSCH based on the N sets of TCI states. The default TCI state is one or more sets of the N sets of TCI states.

It can be understood that the network device may perform PDSCH transmission and/or PUSCH reception based on the determined default TCI state.

The present disclosure improves the reliability of transmission of channels and/or signals based on TCI states by determining one or more sets of TCI states as the default TCI state from multiple sets of TCI states indicated by beam indication information, and performing transmission of channels and/or signals based on the default TCI state.

In the beam indication method provided by the embodiments of the present disclosure, determining the default TCI state for the physical shared channel transmission in S22 may include: determining the default TCI state based on a transmission mode of a physical channel.

In some embodiments, the network device may determine a corresponding default TCI state based on the transmission mode of the physical channel.

For example, the network device may determine the corresponding default TCI state based on the transmission mode of PDSCH and/or PUSCH, or based on the transmission mode of PDCCH, so that the network device sends PDSCH and/or receives PUSCH based on the determined default TCI state.

The transmission modes of the physical channel may include multiple types, for example, a transmission mode related to an FDM, a transmission mode related to a TDM, a transmission mode related to an SDM, or a transmission mode related to an SFN, etc., which is not limited in the present disclosure.

The present disclosure may determine a suitable default TCI state according to the transmission mode of the physical channel, so as to transmit the channels and/or signals based on the default TCI state, thereby improving the reliability of transmission of the channels and/or signals based on the TCI state.

In the beam indication method provided by the embodiments of the present disclosure, in response to a transmission mode of the physical shared channel being a specified transmission mode, the default TCI state is multiple sets of TCI states of the N sets of TCI states; or, based on a situation of a configuration of a specified parameter for the physical shared channel, the default TCI state is one or more sets of TCI states of the N sets of TCI states.

In some embodiments, in response to the transmission mode of the physical shared channel being the specified transmission mode, the default TCI state is multiple sets of TCI states of the N sets of TCI states.

For example, if N is 2, in response to the transmission mode of the physical shared channel being the specified transmission mode, the default TCI state directly includes 2 sets of TCI states. Of course, if N is greater, the default TCI state may directly include all or part of the N sets of TCI states. Specifically, which part of the N sets of TCI states is included in the default TCI state may be preset by the protocol or determined based on the default rule, which is not limited by the present disclosure.

In some embodiments, in response to the transmission mode of the physical shared channel being the specified transmission mode, based on the situation of the configuration of a specified parameter for the physical shared channel, the default TCI state is one or more sets of TCI states of the N sets of TCI states.

For example, the network device may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

It can be understood that the specified transmission mode may be part of the preset transmission modes of the physical channel, for example, an FDM-related transmission mode, a TDM-related transmission mode, etc.

The present disclosure determines a suitable default TCI state in the case that the transmission mode of the physical shared channel is a specified transmission mode, so as to transmit the channels and/or signals based on the default TCI state, thereby improving the reliability of transmission of the channels and/or signals based on the TCI states.

In the beam indication method provided by the embodiments of the present disclosure, in response to a transmission mode of the physical shared channel being a non-specified transmission mode; the default TCI state is one set of TCI states of the N sets of TCI states; or, based on a situation of a configuration of a specified parameter for the physical shared channel, the default TCI state is one or more sets of TCI states of the N sets of TCI states.

In some embodiments, in response to the transmission mode of the physical shared channel being the non-specified transmission mode, the default TCI state is one set of TCI states of the N sets of TCI states.

It can be understood that the non-specified transmission mode is a transmission mode other than the specified transmission mode, or it can also be understood that the physical shared channel is not configured with the specified transmission mode.

In some embodiments, in response to the transmission mode of the physical shared channel being the non-specified transmission mode, based on the configuration of the specified parameter for the physical shared channel, the default TCI state is one or more sets of TCI states of the N sets of TCI states.

For example, the network device may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the configuration for the enabletwoDefaultTCIstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

The present disclosure determines a suitable default TCI state in the case that the transmission mode of the physical shared channel is a non-specified transmission mode, so as to transmit the channels and/or signals based on the default TCI state, thereby improving the reliability of transmission of the channels and/or signals based on the TCI states.

In the beam indication method provided by the embodiments of the present disclosure, in response to the transmission mode of the physical shared channel being an SFN scheme, it may include at least one of the following: in response to the terminal not supporting a dynamic SFN scheme, the default TCI state being multiple sets of TCI states of the N sets of TCI states; in response to the terminal supporting the dynamic SFN scheme, based on the situation of the configuration of the specified parameter for the physical shared channel, the default TCI state being one or more sets of TCI states of the N sets of TCI states.

In some embodiments, in response to the transmission mode of the physical shared channel being the SFN scheme, and in the case that the terminal does not support the dynamic SFN scheme, the default TCI state may be multiple sets of TCI states in the N sets of TCI states. Not supporting the dynamic SFN scheme can be understood as the terminal not supporting dynamic switching between the SFN scheme and single TRP transmission.. That is, if the terminal configures the physical shared channel as the SFN transmission scheme, the physical shared channel cannot be dynamically switched from SFN transmission to single TRP transmission. It can be understood that the SFN transmission scheme is based on multiple sets of TCI states for transmission, while single TRP is based on a single set of TCI states for transmission.

For example, the physical shared channel is configured with the SFN scheme for transmission, and the terminal does not support the dynamic SFN scheme. It can be determined that the default TCI state directly includes multiple sets of TCI states in the N sets of TCI states. For example, the default TCI state may directly include all or part of the N sets of TCI states. For example, the default TCI state may directly include 2 sets of TCI states.

In some embodiments, in response to the transmission mode of the physical shared channel being the SFN scheme and the terminal supporting the dynamic SFN scheme, the default TCI state may be determined to be one or more sets of TCI states of the N sets of TCI states based on the configuration of the specified parameter for the physical shared channel.

For example, the physical shared channel is configured with the SFN scheme for transmission, and the terminal supports the dynamic SFN scheme. The network device may determine that the default TCI state is one or more sets of TCI states of the N sets of TCI states based on the configuration of the specified parameter for the physical shared channel.

For example, the network device may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if enabletwoDefaultTClstate is configured, the default TCI state is two or more TCI states of the N sets of TCI states; if enabletwoDefaultTClstate is not configured, the default TCI state is one set of TCI states of the N sets of TCI states.

In some embodiments, in response to the transmission mode of the physical shared channel being the SFN scheme, the default TCI state may be multiple sets of TCI states of the N sets of TCI states in response to the terminal not supporting the dynamic SFN scheme; and, in response to the terminal supporting the dynamic SFN scheme, based on the situation of the configuration of the specified parameter for the physical shared channel, the default TCI state is one or more sets of TCI states of the N sets of TCI states.

The present disclosure determines a suitable default TCI state in the case that the transmission mode of the physical shared channel is the SFN scheme, so as to transmit the channels and/or signals based on the default TCI state, thereby improving the reliability of transmission of the channels and/or signals based on the TCI states.

In the beam indication method provided by the embodiments of the present disclosure, in response to the transmission mode of a PDCCH being an SFN scheme, it may include at least one of the following: in response to the terminal not supporting a dynamic SFN scheme, the default TCI state being multiple sets of TCI states of the N sets of TCI states; and in response to the terminal supporting the dynamic SFN scheme, based on a transmission mode of the physical shared channel, determining that the default TCI state is one or more sets of TCI states among the N sets of TCI states.

In some embodiments, in response to the transmission mode of the PDCCH being the SFN scheme, and in the case that the terminal does not support the dynamic SFN scheme, the default TCI state may be multiple sets of TCI states of the N sets of TCI states.

For example, the PDCCH is configured with the SFN scheme for transmission, and the terminal does not support a dynamic SFN scheme. It can be determined that the default TCI state directly includes multiple sets of TCI states in the N sets of TCI states. For example, the default TCI state may directly include all or part of the N sets of TCI states. For example, the default TCI state may directly include 2 sets of TCI states.

It can be understood that in this case, PDSCH and/or PUSCH must be configured with a transmission mode based on multiple sets of TCIs, such as any one of the multiple different transmission modes included in the specified transmission modes.

In some embodiments, in response to the transmission mode of the PDCCH being the SFN scheme and in the case that the terminal supports the dynamic SFN scheme, the network device may determine that the default TCI state is one or more sets of TCI states of the N sets of TCI states based on the transmission mode of the physical shared channel.

For example, the PDCCH is configured with an SFN scheme for transmission, and the terminal supports the dynamic SFN scheme. The network device may determine that the default TCI state is one or more sets of TCI states of the N sets of TCI states based on the transmission mode of the PDSCH and/or PUSCH.

For example, the network device may determine that the default TCI state is one set of TCI states of the N sets of TCI states, or determine that the default TCI state is multiple sets of TCI states of the N sets of TCI states, according to whether some specified transmission modes are configured for PDSCH and/or PUSCH.

In some embodiments, in response to the transmission mode of the PDCCH being the SFN scheme, the default TCI state may be multiple sets of TCI states of the N sets of TCI states in response to the terminal not supporting the dynamic SFN scheme; and, in response to the terminal supporting the dynamic SFN scheme, based on the transmission mode of the physical shared channel, the default TCI state is determined to be one or more sets of TCI states of the N sets of TCI states.

The present disclosure determines a suitable default TCI state in the case that the transmission mode of the PDCCH is the SFN scheme, so as to transmit the channels and/or signals based on the default TCI state, thereby improving the reliability of transmission of channels and/or signals based on the TCI states.

In the beam indication method provided by the embodiments of the present disclosure, the method may further include: sending RRC signaling, where the RRC signaling indicates that any CORESET corresponds to multiple sets of TCI states of the N sets of TCI states.

In some embodiments, the network device may further send RRC signaling to the terminal. The RRC signaling may be used to indicate that any CORESET corresponds to multiple sets of TCI states in the N sets of TCI states. The multiple sets of TCI states may be all or part of the N sets of TCI states.

For example, the RRC signaling indicates that a certain CORESET corresponds to transmission based on multiple sets of TCI states of the N sets of TCI states, such as 2 sets of TCI states. Then, for the default beam for the PDSCH and/or PUSCH scheduled or triggered by the DCI on the PDCCH within the CORESET, the default TCI state may be determined as one or more sets of TCI states in the N sets of TCI states according to whether the terminal supports the SFN scheme.

It can be understood that the transmission mode of the PDCCH may be an SFN scheme, that is, the PDCCH is configured with the transmission mode of the SFN scheme.

The present disclosure determines a suitable default TCI state in the case that the RRC indicates the presence of a CORESET corresponding to multiple sets of TCI states of the N sets of TCI states, so as to transmit channels and/or signals based on the default TCI state, thereby improving the reliability of transmission of the channels and/or signals based on the TCI states.

In the beam indication method provided by the embodiments of the present disclosure, in response to the transmission mode of the PDCCH being the SFN scheme, it may include at least one of the following: in response to the terminal not supporting the dynamic SFN scheme, the default TCI state being one set of TCI states of the N sets of TCI states; and in response to the terminal supporting the dynamic SFN scheme, based on a transmission mode of the physical shared channel, determining that the default TCI state being one or more sets of TCI states of the N sets of TCI states.

In some embodiments, in response to the transmission mode of the PDCCH being the SFN scheme, and the terminal not supporting the dynamic SFN scheme, the default TCI state may be one set of TCI states of the N sets of TCI states.

For example, the PDCCH is configured with the SFN scheme for transmission, and the terminal does not support the dynamic SFN scheme. It can be determined that the default TCI state directly includes one set of TCI states of the N sets of TCI states.

It can be understood that in this case, PDSCH and/or PUSCH are not allowed to be configured with transmission modes based on multiple sets of TCIs, for example, PDSCH and/or PUSCH are not allowed to be configured with any one of multiple different transmission modes of the specified transmission modes.

In some embodiments, in response to the transmission mode of the PDCCH being the SFN scheme and in the case that the terminal supports the dynamic SFN scheme, the network device may determine that the default TCI state is one or more sets of TCI states of the N sets of TCI states based on the transmission mode of the physical shared channel.

For example, the PDCCH is configured with the SFN scheme for transmission, and the terminal supports the dynamic SFN scheme. The network device may determine that the default TCI state is one or more sets of TCI states of the N sets of TCI states based on the transmission mode of the PDSCH and/or PUSCH.

For example, the network device may determine that the default TCI state is one set of TCI states of the N sets of TCI states, or determine that the default TCI state is multiple sets of TCI states of the N sets of TCI states, according to whether some specified transmission modes are configured for PDSCH and/or PUSCH.

In some embodiments, in response to the transmission mode of the PDCCH being the SFN scheme, in response to the terminal not supporting the dynamic SFN scheme, the default TCI state may be one set of TCI states of the N sets of TCI states; and, in response to the terminal supporting the dynamic SFN scheme, the default TCI state is determined as one or more sets of TCI states of the N sets of TCI states based on the transmission mode of the physical shared channel.

The present disclosure determines a suitable default TCI state in the case that the transmission mode of the PDCCH is the SFN scheme, so as to transmit the channels and/or signals based on the default TCI state, thereby improving the reliability of transmission of the channels and/or signals based on the TCI state.

In the beam indication method provided by the embodiments of the present disclosure, the method may further include: sending an RRC signaling, where the RRC signaling indicates that any CORESET corresponds to one set of TCI states of the N sets of TCI states.

In some embodiments, the network device may further send an RRC signaling to the terminal. The RRC signaling may be used to indicate that any CORESET corresponds to one set of TCI states of the N sets of TCI states.

For example, the RRC signaling indicates that a certain CORESET corresponds to transmission based on one set of TCI state of the N sets of TCI states. Then, for the default beam for the PDSCH and/or PUSCH scheduled or triggered by the DCI on the PDCCH within the CORESET, the default TCI state may be determined as one or more sets of TCI states in the N sets of TCI states according to whether the terminal supports the SFN scheme.

It can be understood that the transmission mode of the PDCCH may be the SFN scheme, that is, the PDCCH is configured with the transmission mode of the SFN scheme.

The present disclosure determines a suitable default TCI state in the case that the RRC indicates the presence of a CORESET corresponding to one set of TCI states of the N sets of TCI states, so as to transmit the channels and/or signals based on the default TCI state, thereby improving the reliability of transmission of the channels and/or signals based on the TCI state.

In the beam indication method provided by the embodiments of the present disclosure, in response to the terminal supporting the dynamic SFN scheme and the transmission mode of the physical shared channel being the specified transmission mode; the default TCI state is one or more sets of TCI states of the N sets of TCI states; or, based on a situation of a configuration of a specified parameter for the physical shared channel, the default TCI state is one or more sets of TCI states of the N sets of TCI states.

In some embodiments, in response to the terminal supporting the dynamic SFN scheme and the transmission mode of the physical shared channel being the specified transmission mode, the default TCI state may be determined to be one or more sets of TCI states of the N sets of TCI states.

For example, the terminal supports the dynamic SFN scheme, and PDSCH and/or PUSCH are in a specified transmission mode. It can be determined that the default TCI state directly includes one set of TCI states or multiple sets of TCI states of the N sets of TCI states. For example, the default TCI state may directly include all, part, or one set of the N sets of TCI states. For example, the default TCI state may directly include 2 sets of TCI states or 1 set of TCI states.

In some embodiments, in response to the terminal supporting the dynamic SFN scheme and the transmission mode of the physical shared channel being the specified transmission mode, the default TCI state may be determined to be one or more sets of TCI states of the N sets of TCI states based on the situation of the configuration of the specified parameter for the physical shared channel.

For example, the terminal supports the dynamic SFN scheme, and PDSCH and/or PUSCH are in a specified transmission mode. The network device may determine that the default TCI state is one or more sets of TCI states of the N sets of TCI states based on the situation of the configuration of the specified parameter for the physical shared channel.

For example, the network device may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if the enabletwoDefaultTClstate is configured, the default TCI state is two or more TCI states of the N sets of TCI states; if the enabletwoDefaultTClstate is not configured, the default TCI state is one set of TCI states of the N sets of TCI states.

The present disclosure determines a suitable default TCI state in the case that the terminal supports the dynamic SFN scheme and the transmission mode of the physical shared channel is a specified transmission mode, so as to transmit channels and/or signals based on the default TCI state, thereby improving the reliability of transmission of channels and/or signals based on the TCI state.

In the beam indication method provided by the embodiments of the present disclosure, in response to the terminal supporting the dynamic SFN scheme and the transmission mode of the physical shared channel being a non-specified transmission mode; the default TCI state is one set of TCI states of the N sets of TCI states; or, based on the situation of the configuration of a specified parameter for the physical shared channel, the default TCI state is one or more sets of TCI states of the N sets of TCI states.

In some embodiments, in response to the terminal supporting the dynamic SFN scheme and the transmission mode of the physical shared channel being a non-specified transmission mode, the default TCI state may be determined to be one set of TCI states of the N sets of TCI states.

For example, the terminal supports a dynamic SFN scheme, and PDSCH and/or PUSCH are in a non-specified transmission mode. It can be determined that the default TCI state directly includes one set of TCI states of the N sets of TCI states.

In some embodiments, in response to the terminal supporting the dynamic SFN scheme and the transmission mode of the physical shared channel being a non-specified transmission mode, the default TCI state may be determined to be one or more sets of TCI states of the N sets of TCI states based on the situation of the configuration of the specified parameter for the physical shared channel.

For example, the terminal supports a dynamic SFN scheme, and PDSCH and/or PUSCH are in a non-specified transmission mode. The network device may determine that the default TCI state is one or more sets of TCI states of the N sets of TCI states based on the situation of the configuration of the specified parameter for the physical shared channel.

For example, the network device may determine that the default TCI state is one set of TCI states of the N sets of TCI states, or determine that the default TCI state is multiple sets of TCI states of the N sets of TCI states, according to whether the physical shared channel is configured with the specified parameter.

The specified parameter may be, for example, an enabletwoDefaultTClstate parameter. For example, according to the situation of the configuration for the enabletwoDefaultTClstate parameter, it is determined that the default TCI state is one set of TCI states or multiple sets of TCI states of the N sets of TCI states. For example, if the enabletwoDefaultTClstate is configured, the default TCI state is two or more TCI states of the N sets of TCI states; if the enabletwoDefaultTClstate is not configured, the default TCI state is one set of TCI states of the N sets of TCI states.

The present disclosure determines a suitable default TCI state in the case that the terminal supports the dynamic SFN scheme and the transmission mode of the physical shared channel is a non-specified transmission mode, so as to transmit channels and/or signals based on the default TCI state, thereby improving the reliability of transmission of channels and/or signals based on the TCI state.

In the beam indication method provided by the embodiments of the present disclosure, the specified transmission mode may include at least one of the following: an FDM scheme; a TDM scheme; an SDM scheme; and an SFN scheme.

In some embodiments, the specified transmission mode may include an FDM scheme.

For example, the specified transmission mode may include an FDMschemeA and/or an FDMschemeB.

The FDMschemeA means that a same transport block (TB) is transmitted through different TCI states on different frequency domain resources but the same time domain resource.

The FDMschemeB means that the same TB is transmitted multiple times through different TCI states on different frequency domain resources but the same time domain resource.

In some embodiments, the specified transmission mode may include a TDM scheme.

For example, the specified transmission mode may include a TDMschemeA, and/or, a repetitionNumber in PDSCH/PUSCH-TimeDomainResourceAllocation.

The TDMschemeA means that the same TB is transmitted multiple times through different TCI states on the same frequency domain resource but different time domain resources, and the different time domain resources are in the same time slot.

The repetitionNumber in PDSCH/PUSCH-TimeDomainResourceAllocation indicates that the same TB is transmitted multiple times on the same frequency domain resource but different time domain resources through different TCI states, and different time domain resources are in different slots.

In some embodiments, the specified transmission mode may include an SDM scheme.

The SDM scheme means that the same TB is transmitted through different TCI states on DMRS ports of different CDM groups with the same frequency domain resources and the same time domain resources.

In some embodiments, the specified transmission mode may include an SFN scheme.

For example, the specified transmission mode (transmission scheme) may include an SFNschemeA and/or an SFNschemeB.

The SFNschemeA means that the same TB is transmitted through different TCI states on the same frequency domain resources, the same time domain resources, and the DMRS ports of the same CDM group, where the PDSCH/PUSCH has a QCL relationship with the parameters in both TCI states.

The SFNschemeB means that the same TB is transmitted through different TCI states on the same frequency domain resources and the same time domain resources, on the DMRS port of the same CDM group. Among the parameters in the two TCI states, the PDSCH/PUSCH has a QCL relationship with all parameters except for some parameters in the second TCI state, where the some parameters in the second TCI state may include doppler shift, doppler spread, etc.

In some embodiments, the specified transmission mode may include: an FDM scheme, a TDM scheme; an FDM scheme, an SDM scheme; an FDM scheme, an SFN scheme; a TDM scheme, an SDM scheme; a TDM scheme, an SFN scheme; an SDM scheme, an SFN scheme; an FDM scheme, a TDM scheme, an SDM scheme; an FDM scheme, a TDM scheme, an SFN scheme; an FDM scheme, an SDM scheme, an SFN scheme; a TDM scheme, an SDM scheme, an SFN scheme; an FDM scheme, a TDM scheme, an SDM scheme, and an SFN scheme.

The present disclosure provides multiple representations of the specified transmission modes to determine a suitable default TCI state in a corresponding situation, so as to transmit the channels and/or signals based on the default TCI state, thereby improving the reliability of transmission of the channels and/or signals based on the TCI state.

In the beam indication method provided by the embodiments of the present disclosure, based on the situation of the configuration of the specified parameter for the physical shared channel, the default TCI state being one or more sets of TCI states of the N sets of TCI states, may include: in response to the physical shared channel being configured with the specified parameter, the default TCI state being multiple sets of TCI states of the N sets of TCI states; in response to the physical shared channel not being configured with specified parameters, the default TCI state being one set of TCI states of the N sets of TCI states.

In some embodiments, in response to the physical shared channel being configured with the specified parameter, the default TCI state is multiple sets of TCI states of the N sets of TCI states.

For example, the PDSCH and/or PUSCH is configured with the specified parameter, such as configured with an enabletwoDefaultTClstate parameter, and the default TCI state may be determined to be multiple sets of TCI states of the N sets of TCI states.

For example, if N is 2, in response to the PDSCH and/or PUSCH being configured with the enabletwoDefaultTClstate parameter, the default TCI state directly includes 2 sets of TCI states. Of course, if N is greater, the default TCI state may directly include all or part of the N sets of TCI states. Which specific part of the N sets of TCI states the default TCI state includes may be preset by the protocol or determined based on default rules, which is not limited in the present disclosure.

In some embodiments, in response to the physical shared channel not being configured with a specified parameter, the default TCI state is one set of TCI states of the N sets of TCI states.

For example, if the PDSCH and/or PUSCH is not configured with the specified parameter, e.g., the enabletwoDefaultTClstate parameter is not configured, it can be determined that the default TCI state is one set of TCI states of the N sets of TCI states.

The present disclosure can determine a suitable default TCI state according to different situations of the configuration of the specified parameter for the physical shared channel, so as to transmit channels and/or signals based on the default TCI state, thereby improving the reliability of transmission of channels and/or signals based on the TCI state.

In the beam indication method provided by the embodiments of the present disclosure, the one set of TCI states is the first set of TCI states in the unified TCI state.

In some embodiments, the one set of TCI states may be the first set of TCI states in the unified TCI state.

For example, the first set of TCI states may be a TCI state corresponding to the minimum TCI state identifier in the unified TCI state of the beam indication information. The identifier may be an ID or an index.

For example, the first set of TCI states is the TCI state corresponding to the minimum TCI state ID.

For another example, the first set of TCI states may be the TCI state with the lowest bit position in the unified TCI state of the beam indication information.

For example, the first set of TCI states is the TCI state corresponding to the lowest bit position in the unified TCI state of the beam indication information.

The present disclosure provides a specific representation when the default TCI state is one set of TCI states, so as to transmit channels and/or signals based on the default TCI state, thereby improving the reliability of transmission of the channels and/or signals based on the TCI state.

In the beam indication method provided by the embodiments of the present disclosure, the default TCI state is determined in response to at least one of the following conditions being met: a first DCI not including a correspondence indication field for indicating a physical shared channel and N sets of TCI states; the physical shared channel being transmitted before the terminal receives a second DCI including the correspondence indication field; and the time offset between the third DCI and a PDSCH is less than an offset threshold, where the third DCI is a DCI for scheduling the PDSCH.

In some embodiments, when the first DCI does not include a correspondence indication field for indicating the physical shared channel and the N sets of TCI states, the network device may determine the default TCI state.

For example, when the first DCI sent by the network device does not include a correspondence indication field for indicating the correspondence between PDSCH and/or PUSCH and the N sets of TCI states, the first DCI received by the terminal does not include the correspondence indication field, so the correspondence between the physical shared channel and the N sets of TCI states cannot be parsed. In this case, the network device may determine the default TCI state so as to perform PDSCH and/or PUSCH transmission based on the default TCI state.

In some embodiments, when the physical shared channel is transmitted before the terminal receives the second DCI including the correspondence indication field, the network device may determine the default TCI state.

For example, if the terminal needs to transmit PDSCH and/or PUSCH before receiving the second DCI that includes the correspondence indication field, the terminal cannot parse the correspondence between the physical shared channel and the N sets of TCI states since the terminal has not received the second DCI that includes the correspondence indication field. In this case, the network device may determine the default TCI state so as to transmit the PDSCH and/or the PUSCH based on the default TCI state.

In some embodiments, when the time offset between the third DCI and the PDSCH is less than the offset threshold, the network device may determine the default TCI state. The third DCI is the DCI that schedules the PDSCH.

For example, the offset between the third DCI sent by the network device and the PDSCH is less than the offset threshold, the terminal may not have completed the decoding of the third DCI, and therefore is unable to obtain the correspondence between the physical shared channel and the N sets of TCI states. In this case, the network device may determine the default TCI state so that the PDSCH and/or the PUSCH transmission is performed based on the default TCI state. The duration or time period corresponding to the offset is mainly used for the terminal to decode the DCI.

It can be understood that in the various situations mentioned above, it can be considered that the terminal is unable to determine the correspondence between PDSCH and/or PUSCH and N sets of TCI states based on the correspondence indication field of DCI.

In some embodiments, when the first DCI does not include a correspondence indication field for indicating the correspondence between the physical shared channel and N sets of TCI states, and when the physical shared channel is transmitted before the terminal receives the second DCI that includes the correspondence indication field, the network device may determine the default TCI state.

In some embodiments, when the first DCI does not include a correspondence indication field for indicating the physical shared channel and N sets of TCI states, and when the time offset between the third DCI and the PDSCH is less than the offset threshold, the network device may determine the default TCI state.

In some embodiments, when the physical shared channel is transmitted before the terminal receives the second DCI that includes the correspondence indication field, and when the time offset between the third DCI and the PDSCH is less than the offset threshold, the network device may determine the default TCI state.

In some embodiments, when the first DCI does not include the correspondence indication field for indicating the correspondence between the physical shared channel and N sets of TCI states, and when the physical shared channel is transmitted before the terminal receives the second DCI that includes the correspondence indication field, and when the time offset between the third DCI and the PDSCH is less than an offset threshold, the network device may determine the default TCI state.

It should be understood that the first DCI, the second DCI and the third DCI mentioned above may be the same, partially the same or all different, which is not limited by the present disclosure.

The present disclosure can determine a suitable default TCI state when the terminal cannot determine the TCI state based on the DCI, so as to transmit channels and/or signals based on the default TCI state, thereby improving the reliability of transmission of channels and/or signals based on the TCI state.

In the beam indication method provided by the embodiments of the present disclosure, each set of TCI states may include: a joint TCI state; or at least one of an uplink UL TCI state and a downlink DL TCI state.

In some embodiments, each set of TCI states may include a joint TCI state.

In some embodiments, each set of TCI states may include a UL TCI state and/or a DL TCI state.

The present disclosure can adapt to different scenarios of unified TCI state indication, and can transmit channels and/or signals based on the default TCI state, thereby improving the reliability of transmission of channels and/or signals based on the TCI state.

In the beam indication method provided by the embodiments of the present disclosure, the beam indication information is carried by a MAC CE, and the MAC CE is used to indicate the N sets of TCI states, and the N sets of TCI states correspond to one codepoint in a TCI indication field in the fourth DCI.

In some embodiments, the beam indication information may be carried by the MAC CE. The MAC CE may be used to indicate the N sets of TCI states. The N sets of TCI states may correspond to one codepoint in the TCI indication field in the fourth DCI. In this case, the TCI indication field in the fourth DCI is not required to further indicate the codepoint.

The present disclosure provides a mode of carrying beam indication information through MAC CE to indicate the N sets of TCI states, so as to determine a suitable default TCI state from the N sets of TCI states, so that the channels and/or signals are transmitted based on the default TCI state, thereby improving the reliability of transmission of channels and/or signals based on the TCI state.

In the beam indication method provided by the embodiments of the present disclosure, the beam indication information is carried by a MAC CE and the fifth DCI, the MAC CE is used to indicate the N sets of TCI states respectively corresponding to multiple codepoints in the TCI indication field in the fifth DCI, and the TCI indication field in the fifth DCI is used to indicate one codepoint of the multiple codepoints.

In some embodiments, the beam indication information may be carried by the MAC CE and the fifth DCI. The MAC CE may be used to indicate multiple N sets of TCI states. It can be understood that each N set of TCI states corresponds to one codepoint. In other words, the MAC CE indicates N sets of TCI states respectively corresponding to the multiple codepoints. The TCI indication field in the fifth DCI is used to indicate one codepoint of the multiple codepoints, so as to further indicate a specific group of N sets of TCI states from the multiple groups of N sets of TCI states.

It can be understood that in the N sets of TCI states respectively corresponding to the multiple codepoints, the value of N may be the same or different.

The present disclosure provides a mode of carrying beam indication information through MAC CE and DCI to indicate N sets of TCI states, so as to determine a suitable default TCI state from the N sets of TCI states, so that channels and/or signals are transmitted based on the default TCI state, thereby improving the reliability of transmission of channels and/or signals based on the TCI state.

It should be noted that those skilled in the art can understand that various implementations/embodiments involved in the embodiments of the disclosure can be used in combination with the foregoing embodiments, or can be used independently. Whether it is used independently or in combination with the foregoing embodiments, the implementation principles thereof are similar. During implementation of the disclosure, some embodiments are described in an implementation manner of being used together. Certainly, those skilled in the art can understand that such illustrations are not intended to limit embodiments of the disclosure.

Based on the same concept, the embodiments of the present disclosure further provide a beam indication apparatus and device.

It can be understood that in order to implement the above functions, the beam indication apparatus and device provided in the embodiments of the present disclosure include corresponding hardware structures and/or software modules for executing various functions. With reference to the units and algorithm steps of the examples disclosed in the embodiments of the present disclosure, the embodiments of the present disclosure can be implemented in the form of hardware or a combination of hardware and computer software. Whether a certain function is executed in the form of hardware or in the way that computer software drives the hardware depends on the specific application and design constraints of the technical solution. Those skilled in the art can implement the described functions through different methods for each particular application, but such implementation should not be considered beyond the scope of the technical solutions of the embodiments of the disclosure.

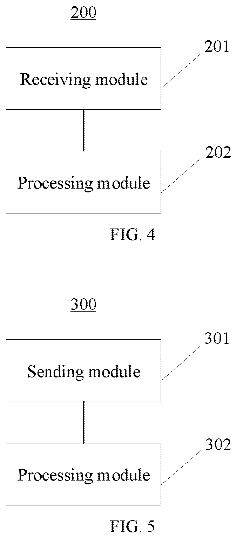

FIG. 4 is a schematic diagram of a beam indication apparatus shown according to an exemplary embodiment. Referring to FIG. 4, the device 200 includes: a receiving module 201, configured to receive beam indication information, where the beam indication information is used to indicate a unified TCI state of a terminal, and the unified TCI state includes N sets of TCI states, where N is a positive integer; and a processing module 202, configured to determine a default TCI state for physical shared channel transmission, where the default TCI state is one or more sets of TCI states of the N sets of TCI states.

The present disclosure improves the reliability of transmission of channels and/or signals based on TCI states by determining one or more sets of TCI states as the default TCI state from multiple sets of TCI states indicated by beam indication information, and performing transmission of channels and/or signals based on the default TCI state.

In some implementations, the processing module 202 is further configured to: determine the default TCI state based on a transmission mode of a physical channel.

The present disclosure may determine a suitable default TCI state according to the transmission mode of the physical channel, so as to transmit the channels and/or signals based on the default TCI state, thereby improving the reliability of transmission of the channels and/or signals based on the TCI state.

In some implementations, in response to a transmission mode of the physical shared channel being a specified transmission mode, the default TCI state is multiple sets of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the transmission mode of the physical shared channel is a specified transmission mode, so as to transmit the channels and/or signals based on the default TCI state, thereby improving the reliability of transmission of the channels and/or signals based on the TCI states.

In some implementations, in response to a transmission mode of the physical shared channel being a non-specified transmission mode, the default TCI state is one set of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the transmission mode of the physical shared channel is a non-specified transmission mode, so as to transmit the channels and/or signals based on the default TCI state, thereby improving the reliability of transmission of the channels and/or signals based on the TCI states.

In some embodiments, in response to the transmission mode of the physical shared channel being an SFN scheme, it may include at least one of the following: in response to the terminal not supporting a dynamic SFN scheme, the default TCI state being multiple sets of TCI states of the N sets of TCI states; in response to the terminal supporting the dynamic SFN scheme, based on the situation of the configuration of the specified parameter for the physical shared channel, the default TCI state being one or more sets of TCI states of the N sets of TCI states.

The present disclosure determines a suitable default TCI state in the case that the transmission mode of the physical shared channel is an SFN scheme, so as to transmit the channels and/or signals based on the default TCI state, thereby improving the reliability of transmission of the channels and/or signals based on the TCI states.

In some implementation manners, in response to the transmission mode of the PDCCH being an SFN scheme, it may include at least one of the following: in response to the terminal not supporting a dynamic SFN scheme, the default TCI state being multiple sets of TCI states of the N sets of TCI states; and in response to the terminal supporting the dynamic SFN scheme, based on a transmission mode of the physical shared channel, determining that the default TCI state is one or more sets of TCI states among the N sets of TCI states.

The present disclosure determines a suitable default TCI state in the case that the transmission mode of the PDCCH is an SFN scheme, so as to transmit channels and/or signals based on the default TCI state, thereby improving the reliability of transmission of channels and/or signals based on the TCI states.

In some implementations, the receiving module 201 is further configured to: receive RRC signaling, where the RRC signaling indicates that any control resource set (CORESET) corresponds to multiple sets of TCI states of the N sets of TCI states.

The present disclosure determines a suitable default TCI state in the case that the RRC indicates the presence of a CORESET corresponding to multiple sets of TCI states of the N sets of TCI states, so as to transmit channels and/or signals based on the default TCI state, thereby improving the reliability of transmission of channels and/or signals based on the TCI states.

In some implementations, in response to the transmission mode of the PDCCH being the SFN scheme, it may include at least one of the following: in response to the terminal not supporting the dynamic SFN scheme, the default TCI state being one set of TCI states of the N sets of TCI states; and in response to the terminal supporting the dynamic SFN scheme, based on a transmission mode of the physical shared channel, determining that the default TCI state is one or more sets of TCI states among the N sets of TCI states.

The present disclosure determines a suitable default TCI state in the case that the transmission mode of the PDCCH is the SFN scheme, so as to transmit the channels and/or signals based on the default TCI state, thereby improving the reliability of transmission of the channels and/or signals based on the TCI state.

In some implementations, the receiving module 201 is further configured to: receive RRC signaling, where the RRC signaling indicates that any CORESET corresponds to one set of TCI states of the N sets of TCI states.

The present disclosure determines a suitable default TCI state in the case that the RRC indicates the presence of a CORESET corresponding to one set of TCI states of the N sets of TCI states, so as to transmit channels and/or signals based on the default TCI state, thereby improving the reliability of transmission of channels and/or signals based on the TCI state.

In some implementations, in response to the terminal supporting the dynamic SFN scheme and the transmission mode of the physical shared channel being the specified transmission mode; the default TCI state is one or more sets of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the terminal supports the dynamic SFN scheme and the transmission mode of the physical shared channel is a specified transmission mode, so as to transmit channels and/or signals based on the default TCI state, thereby improving the reliability of transmission of channels and/or signals based on the TCI state.

In some implementations, in response to the terminal supporting the dynamic SFN scheme and the transmission mode of the physical shared channel being a non-specified transmission mode, the default TCI state is one set of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the terminal supports the dynamic SFN scheme and the transmission mode of the physical shared channel is a non-specified transmission mode, so as to transmit channels and/or signals based on the default TCI state, thereby improving the reliability of transmission of channels and/or signals based on the TCI state.

In some implementations, the specified transmission mode includes at least one of the following: a frequency division multiplexing (FDM) scheme; a time division multiplexing (TDM) scheme; a space division multiplexing (SDM) scheme; and a single frequency network (SFN) scheme.

The present disclosure provides multiple representations of the specified transmission modes to determine a suitable default TCI state in a corresponding situation, so as to transmit channels and/or signals based on the default TCI state, thereby improving the reliability of transmission of the channels and/or signals based on the TCI state.

In some implementations, based on the situation of the configuration of the specified parameter for the physical shared channel, the default TCI state being one or more sets of TCI states of the N sets of TCI states, includes: in response to the physical shared channel being configured with the specified parameter, the default TCI state being multiple sets of TCI states of the N sets of TCI states; in response to the physical shared channel not being configured with the specified parameter, the default TCI state being one set of TCI states of the N sets of TCI states.

The present disclosure can determine a suitable default TCI state according to different situations of the configuration of the specified parameter for the physical shared channel, so as to transmit channels and/or signals based on the default TCI state, thereby improving the reliability of transmission of channels and/or signals based on the TCI state.

In some implementations, the one set of TCI states is the first set of TCI states in the unified TCI state.

The present disclosure provides a specific representation when the default TCI state is one set of TCI states, so as to transmit channels and/or signals based on the default TCI state, thereby improving the reliability of transmission of channels and/or signals based on the TCI state.

In some implementations, the default TCI state is determined in response to at least one of the following conditions being met: a first DCI not including a correspondence indication field for indicating the physical shared channel and the N sets of TCI states; the physical shared channel being transmitted before the terminal receives a second DCI including the correspondence indication field; and the time offset between the third DCI and a PDSCH is less than an offset threshold, where the third DCI is a DCI for scheduling the PDSCH.

The present disclosure can determine a suitable default TCI state when the terminal is unable to determine the TCI state based on the DCI, so as to transmit channels and/or signals based on the default TCI state, thereby improving the reliability of transmission of channels and/or signals based on the TCI state.

In some implementations, each set of TCI states may include: a joint TCI state; or at least one of an uplink (UL) TCI state and a downlink (DL) TCI state.

The present disclosure can adapt to different scenarios of unified TCI state indication, and can transmit channels and/or signals based on the default TCI state, thereby improving the reliability of transmission of channels and/or signals based on the TCI state.

In some implementations, the beam indication information is carried by a MAC CE, and the MAC CE is used to indicate the N sets of TCI states, and the N sets of TCI states correspond to one codepoint in a TCI indication field in the fourth DCI.

The present disclosure provides a mode of carrying beam indication information through MAC CE to indicate the N sets of TCI states, so as to determine a suitable default TCI state from the N sets of TCI states, so that channels and/or signals are transmitted based on the default TCI state, thereby improving the reliability of transmission of channels and/or signals based on the TCI state.

In some implementations, the beam indication information is carried by a MAC CE and the fifth DCI, the MAC CE is used to indicate the N sets of TCI states respectively corresponding to multiple codepoints in the TCI indication field in the fifth DCI, and the TCI indication field in the fifth DCI is used to indicate one codepoint among the multiple codepoints.

The present disclosure provides a mode of carrying beam indication information through MAC CE and DCI to indicate N sets of TCI states, so as to determine a suitable default TCI state from the N sets of TCI states, so that channels and/or signals are transmitted based on the default TCI state, thereby improving the reliability of transmission of channels and/or signals based on the TCI state.

It can be understood that in some cases, the apparatus 200 may further include any other possible modules such as a sending module.

FIG. 5 is a schematic diagram of another beam indication apparatus shown according to an exemplary embodiment. Referring to FIG. 5, the apparatus 300 includes: a sending module 301, configured to send beam indication information, the beam indication information is used to indicate a unified TCI state of a terminal, the unified TCI state includes N sets of TCI states, where N is a positive integer; and a processing module 302, configured to determine a default TCI state for physical shared channel transmission, where the default TCI state is one or more sets of TCI states among the N sets of TCI states.

The present disclosure improves the reliability of transmission of channels and/or signals based on TCI states by determining one or more sets of TCI states as the default TCI state from multiple sets of TCI states indicated by beam indication information, and performing transmission of channels and/or signals based on the default TCI state.

In some implementations, the processing module 302 is further configured to: determine the default TCI state based on a transmission mode of a physical channel.

The present disclosure may determine a suitable default TCI state according to the transmission mode of the physical channel, so as to transmit the channels and/or signals based on the default TCI state, thereby improving the reliability of transmission of the channels and/or signals based on the TCI state.

In some implementations, in response to a transmission mode of the physical shared channel being a specified transmission mode, the default TCI state is multiple sets of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the transmission mode of the physical shared channel is a specified transmission mode, so as to transmit the channels and/or signals based on the default TCI state, thereby improving the reliability of transmission of the channels and/or signals based on the TCI states.

In some implementations, in response to a transmission mode of the physical shared channel being a non-specified transmission mode; the default TCI state is one set of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the transmission mode of the physical shared channel is a non-specified transmission mode, so as to transmit the channels and/or signals based on the default TCI state, thereby improving the reliability of transmission of the channels and/or signals based on the TCI states.

In some implementations, in response to the transmission mode of the physical shared channel being an SFN scheme, it may include at least one of the following: in response to the terminal not supporting a dynamic SFN scheme, the default TCI state being multiple sets of TCI states of the N sets of TCI states; in response to the terminal supporting the dynamic SFN scheme, based on the situation of the configuration of the specified parameter for the physical shared channel, the default TCI state being one or more sets of TCI states of the N sets of TCI states.

The present disclosure determines a suitable default TCI state in the case that the transmission mode of the physical shared channel is the SFN scheme, so as to transmit the channels and/or signals based on the default TCI state, thereby improving the reliability of transmission of the channels and/or signals based on the TCI states.

In some implementations, in response to the transmission mode of a PDCCH being an SFN scheme, it may include at least one of the following: in response to the terminal not supporting a dynamic SFN scheme, the default TCI state being multiple sets of TCI states of the N sets of TCI states; and in response to the terminal supporting the dynamic SFN scheme, based on a transmission mode of the physical shared channel, determining that the default TCI state is one or more sets of TCI states among the N sets of TCI states.

The present disclosure determines a suitable default TCI state in the case that the transmission mode of the PDCCH is the SFN scheme, so as to transmit channels and/or signals based on the default TCI state, thereby improving the reliability of transmission of channels and/or signals based on the TCI states.

In some implementations, the sending module 301 is further configured to: send RRC signaling, where the RRC signaling indicates that any CORESET corresponds to multiple sets of TCI states of the N sets of TCI states.

The present disclosure determines a suitable default TCI state in the case that the RRC indicates the presence of a CORESET corresponding to multiple sets of TCI states of the N sets of TCI states, so as to transmit channels and/or signals based on the default TCI state, thereby improving the reliability of transmission of channels and/or signals based on the TCI states.

In some implementations, in response to the transmission mode of PDCCH being the SFN scheme, it may include at least one of the following: in response to the terminal not supporting the dynamic SFN scheme, the default TCI state being one set of TCI states of the N sets of TCI states; and in response to the terminal supporting the dynamic SFN scheme, based on a transmission mode of the physical shared channel, determining that the default TCI state is one or more sets of TCI states of the N sets of TCI states.

The present disclosure determines a suitable default TCI state in the case that the transmission mode of the PDCCH is the SFN scheme, so as to transmit channels and/or signals based on the default TCI state, thereby improving the reliability of transmission of channels and/or signals based on the TCI state.

In some implementations, the sending module 301 is further configured to: send RRC signaling, where the RRC signaling indicates that any CORESET corresponds to one set of TCI states of the N sets of TCI states.

The present disclosure determines a suitable default TCI state in the case that the RRC indicates the presence of a CORESET corresponding to one set of TCI states of the N sets of TCI states, so as to transmit channels and/or signals based on the default TCI state, thereby improving the reliability of transmission of channels and/or signals based on the TCI state.

In some implementations, in response to the terminal supporting the dynamic SFN scheme and the transmission mode of the physical shared channel being the specified transmission mode; the default TCI state is one or more sets of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the terminal supports the dynamic SFN scheme and the transmission mode of the physical shared channel is a specified transmission mode, so as to transmit channels and/or signals based on the default TCI state, thereby improving the reliability of transmission of channels and/or signals based on the TCI state.

In some implementations, in response to the terminal supporting the dynamic SFN scheme and the transmission mode of the physical shared channel being a non-specified transmission mode; the default TCI state is one set of TCI states of the N sets of TCI states; or, based on a situation of a configuration of a specified parameter for the physical shared channel, the default TCI state is one or more sets of TCI states of the N sets of TCI states.

The present disclosure determines a suitable default TCI state in the case that the terminal supports the dynamic SFN scheme and the transmission mode of the physical shared channel is a non-specified transmission mode, so as to transmit channels and/or signals based on the default TCI state, thereby improving the reliability of transmission of channels and/or signals based on the TCI state.

In some implementations, the specified transmission mode includes at least one of the following: a frequency division multiplexing (FDM) scheme; a time division multiplexing (TDM) scheme; a space division multiplexing (SDM) scheme; a single frequency network (SFN) scheme.

The present disclosure provides various manifestations of the specified transmission modes to determine a suitable default TCI state in a corresponding situation, so as to transmit channels and/or signals based on the default TCI state, thereby improving the reliability of transmission of the channels and/or signals based on the TCI state.

In some implementations, based on the situation of the configuration of the specified parameter for the physical shared channel, the default TCI state being one or more sets of TCI states of the N sets of TCI states, includes: in response to the physical shared channel being configured with the specified parameter, the default TCI state being multiple sets of TCI states of the N sets of TCI states; in response to the physical shared channel not being configured with the specified parameter, the default TCI state being one set of TCI states of the N sets of TCI states.

The present disclosure can determine a suitable default TCI state according to different situations of the configuration of the specified parameter for the physical shared channel, so as to transmit channels and/or signals based on the default TCI state, thereby improving the reliability of transmission of channels and/or signals based on the TCI state.

In some implementations, the one set of TCI states is the first set of TCI states in the unified TCI state.

The present disclosure provides a specific representation when the default TCI state is one set of TCI states, so as to transmit channels and/or signals based on the default TCI state, thereby improving the reliability of transmission of channels and/or signals based on the TCI state.

In some implementations, the default TCI state is determined in response to at least one of the following conditions being met: a first DCI not including a correspondence indication field for indicating the physical shared channel and the N sets of TCI states; the physical shared channel being transmitted before the terminal receives a second DCI including the correspondence indication field; and the time offset between the third DCI and a PDSCH is less than an offset threshold, where the third DCI is a DCI for scheduling the PDSCH.

The present disclosure can determine a suitable default TCI state when the terminal cannot determine the TCI state based on the DCI, so as to transmit channels and/or signals based on the default TCI state, thereby improving the reliability of transmission of channels and/or signals based on the TCI state.

In some implementations, each set of TCI states may include: a joint TCI state; or at least one of an uplink UL TCI state and a downlink DL TCI state.

The present disclosure can adapt to different scenarios of unified TCI state indication, and can transmit channels and/or signals based on the default TCI state, thereby improving the reliability of transmission of channels and/or signals based on the TCI state.

In some implementations, the beam indication information is carried by a MAC CE, and the MAC CE is used to indicate the N sets of TCI states, and the N sets of TCI states correspond to one codepoint in a TCI indication field in the fourth DCI.

The present disclosure provides a method of carrying beam indication information through MAC CE to indicate the N sets of TCI states, so as to determine a suitable default TCI state from the N sets of TCI states, so that channels and/or signals are transmitted based on the default TCI state, thereby improving the reliability of transmission of channels and/or signals based on the TCI state.

In some implementations, the beam indication information is carried by a MAC CE and the fifth DCI, the MAC CE is used to indicate the N sets of TCI states respectively corresponding to multiple codepoints in the TCI indication field in the fifth DCI, and the TCI indication field in the fifth DCI is used to indicate one codepoint of the multiple codepoints.

The present disclosure provides a method of carrying beam indication information through MAC CE and DCI to indicate N sets of TCI states, so as to determine a suitable default TCI state from the N sets of TCI states, so that channels and/or signals are transmitted based on the default TCI state, thereby improving the reliability of transmission of channels and/or signals based on the TCI state.

It can be understood that in some cases, the apparatus 300 may further include any other possible modules such as a receiving module.

Regarding the apparatus in the above embodiments, the specific manners in which each module performs operations have been described in detail in the embodiments related to the method, and will not be elaborated herein.

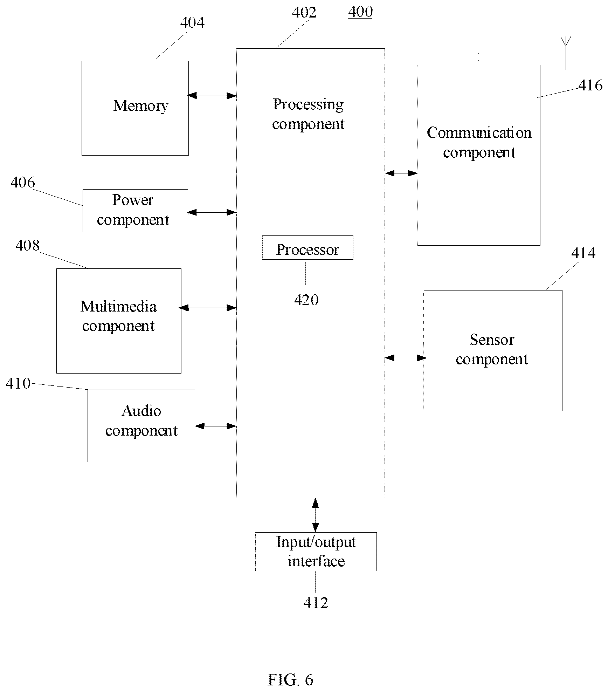

FIG. 6 is a schematic diagram of a beam indication device shown according to an exemplary embodiment. For example, the device 400 may be any terminal such as a mobile phone, a computer, a digital broadcasting terminal, a message receiving and transmitting device, a game console, a tablet device, a medical device, a fitness device, or a personal digital assistant, etc.

Referring to FIG. 6, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operation of the device 400, such as the operations associated with display, telephone calls, data communications, camera operations, and recording operations. The processing component 402 may include one or more processors 420 to execute instructions to complete all or part of the steps of the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the apparatus 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 408 includes a front camera and/or a rear camera. The front camera and/or the rear camera may receive external multimedia data while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide state assessments of various aspects of the device 400. For instance, the sensor component 414 may detect an open/closed state of the device 400, relative positioning of components, e.g., the display and the keypad of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G or 3G, or a combination thereof. In an exemplary embodiment, the communication component 416 receives a broadcast signal or broadcast associated information from an external broadcast management system via a broadcast channel. In an exemplary embodiment, the communication component 416 further includes a near field communication (NFC) module to facilitate shortrange communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as the memory 404 including instructions, executable by the processor 420 in the device 400, for completing the above methods. For example, the non-transitory computer-readable storage medium may be a ROM, a random access memory (RAM), a CD-ROM, a magnetic tape, a floppy disc, an optical data storage device, and the like.

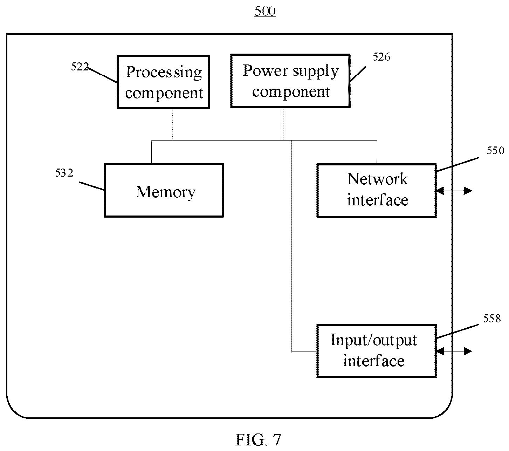

FIG. 7 is a schematic diagram of another beam indication device shown according to an exemplary embodiment. For example, device 500 may be provided as a base station, or a server. Referring to FIG. 7, the device 500 includes a processing component 522, which further includes one or more processors, and a memory resource represented by a memory 532 for storing instructions, such as an application program, that may be executed by the processing component 522. The application program stored in the memory 532 may include one or more modules, each corresponding to a set of instructions. In addition, the processing component 522 is configured to execute instructions to perform any of the aforementioned methods.

The device 500 may further include a power supply component 526 configured to perform power management of the device 500, a wired or wireless network interface 550 configured to connect the device 500 to a network, and an input/output (I/O) interface 558. The device 500 may operate based on an operating system stored in the memory 532, such as a Windows Server^{™}, a Mac OS X^{™}, a Unix^{™}, a Linux^{™}, a FreeBSD^{™}, or the like.

The present disclosure proposes, in the case of indication of a unified TCI state with single-DCI for multiple TRPs, when the beam indication information indicates multiple sets of TCI states and the terminal cannot determine the TCI state of PDSCH/PUSCH, which one or more sets of TCI states of the multiple sets of TCI states is the default TCI state for PDSCH/PUSCH, thereby improving the reliability of transmission of PDSCH/PUSCH based on the unified TCI state.

It may be further understood that, in the present disclosure, "a plurality of' means two or more than two, and other quantifiers are similar thereto. "And/or" describes the association relationship of associated objects, which indicates that three relationships may exist. For example, A and/or B may represent: A exists alone, A and B exist at the same time, and B exists alone. The character "/" generally indicates that the associated objects before and after are in an "or" relationship. The singular forms of "a", "the" and "said" are also intended to include the plural forms, unless otherwise clearly indicated by the context.

It may be further understood that the terms "first", "second", etc. are used to describe various information, but such information should not be limited to these terms. These terms are only used to distinguish information of the same type from each other, and do not indicate a specific order or degree of importance. In fact, the expressions "first", "second", etc. can be used interchangeably. For example, without departing from the scope of the present disclosure, the first information can also be referred to as the second information, and similarly, the second information can also be referred to as the first information.

It can be further understood that the meanings of the terms such as "in response to" and "if" involved in the present disclosure depend on the context and the actual usage scenarios. For example, the term "in response to" used herein may be interpreted as "at the time of" or "when..." or "if" or "upon".

It can be further understood that, although the operations are described in a specific order in the drawings in the embodiments of the present disclosure, it should not be construed as requiring the operations to be performed in the specific order shown or in a sequential order, nor as requiring the execution of all the operations shown to obtain the desired result. In certain environments, multitasking and parallel processing may be advantageous.

Those skilled in the art will readily appreciate other implementation solutions of the present disclosure after considering the specification and practicing the disclosure disclosed herein. The present disclosure is intended to cover any variations, uses or adaptations of the present disclosure that follow the general principles of the present disclosure and include common knowledge or customary technical means in the art that are not disclosed in the present disclosure.

It should be understood that the present disclosure is not limited to the exact structures that have been described above and shown in the accompanying drawings, and various modifications and changes may be made without departing from the scope thereof. The scope of the present disclosure is limited only by the appended claims.

## Claims

1. A beam indication method, performed by a terminal, comprising:
receiving beam indication information, wherein the beam indication information is used to indicate a unified transmission configuration indication (TCI) state of the terminal, and the unified TCI state comprises N sets of TCI states, wherein N is a positive integer; and
determining a default TCI state for physical shared channel transmission, wherein the default TCI state is one or more sets of TCI states of the N sets of TCI states.

2. The method according to claim 1, wherein determining the default TCI state for the physical shared channel transmission comprises:
determining the default TCI state based on a transmission mode of a physical channel.

3. The method according to claim 2, wherein in response to a transmission mode of the physical shared channel being a specified transmission mode;
the default TCI state is multiple sets of TCI states of the N sets of TCI states; or,
based on a situation of a configuration of a specified parameter for the physical shared channel, the default TCI state is one or more sets of TCI states of the N sets of TCI states.

4. The method according to claim 2, wherein in response to a transmission mode of the physical shared channel being a non-specified transmission mode;
the default TCI state is one set of TCI states of the N sets of TCI states; or,
based on a situation of a configuration of a specified parameter for the physical shared channel, the default TCI state is one or more sets of TCI states of the N sets of TCI states.

5. The method according to claim 3, wherein in response to the transmission mode of the physical shared channel being a single frequency network (SFN) scheme, the method comprises at least one of following:
in response to the terminal not supporting a dynamic SFN scheme, the default TCI state being multiple sets of TCI states of the N sets of TCI states; and
in response to the terminal supporting the dynamic SFN scheme, based on the situation of the configuration of the specified parameter for the physical shared channel, the default TCI state being one or more sets of TCI states of the N sets of TCI states.

6. The method according to claim 2, wherein in response to a transmission mode of a physical downlink control channel (PDCCH) being an SFN scheme, the method comprises at least one of following:
in response to the terminal not supporting a dynamic SFN scheme, the default TCI state being multiple sets of TCI states of the N sets of TCI states; and
in response to the terminal supporting the dynamic SFN scheme, based on a transmission mode of the physical shared channel, determining that the default TCI state is one or more sets of TCI states of the N sets of TCI states.

7. The method according to claim 6, further comprising:
receiving a radio resource control (RRC) signaling, wherein the RRC signaling indicates that any control resource set (CORESET) corresponds to multiple sets of TCI states of the N sets of TCI states.

8. The method according to claim 2, wherein in response to a transmission mode of a PDCCH being an SFN scheme, the method comprises at least one of following:
in response to the terminal not supporting a dynamic SFN scheme, the default TCI state being one set of TCI states of the N sets of TCI states; and
in response to the terminal supporting the dynamic SFN scheme, based on a transmission mode of the physical shared channel, determining that the default TCI state is one or more sets of TCI states of the N sets of TCI states.

9. The method according to claim 8, further comprising:
receiving an RRC signaling, wherein the RRC signaling indicates that any CORESET corresponds to one set of TCI states of the N sets of TCI states.

10. The method according to any one of claims 6 to 9, wherein in response to the terminal supporting the dynamic SFN scheme and the transmission mode of the physical shared channel being a specified transmission mode, the method comprises:
the default TCI state being one or more sets of TCI states of the N sets of TCI states; or,
based on a situation of a configuration of a specified parameter for the physical shared channel, the default TCI state being one or more sets of TCI states of the N sets of TCI states.

11. The method according to any one of claims 6 to 9, wherein in response to the terminal supporting the dynamic SFN scheme and the transmission mode of the physical shared channel being a non-specified transmission mode, the method comprises:
the default TCI state being one set of TCI states of the N sets of TCI states; or,
based on a situation of a configuration of a specified parameter for the physical shared channel, the default TCI state being one or more sets of TCI states of the N sets of TCI states.

12. The method according to any one of claims 3 to 5, 10 and 11, wherein the specified transmission mode comprises at least one of following:
a frequency division multiplexing (FDM) scheme;
a time division multiplexing (TDM) scheme;
a space division multiplexing (SDM) scheme; and
a single frequency network (SFN) scheme.

13. The method according to any one of claims 3 to 12, wherein based on the situation of the configuration of the specified parameter for the physical shared channel, the default TCI state being one or more sets of TCI states of the N sets of TCI states, comprises:
in response to the physical shared channel being configured with the specified parameter, the default TCI state being multiple sets of TCI states of the N sets of TCI states; and
in response to the physical shared channel not being configured with the specified parameter, the default TCI state being one set of TCI states of the N sets of TCI states.

14. The method according to claim 1, wherein the one set of TCI states is a first set of TCI states in the unified TCI state.

15. The method according to claim 1, wherein the default TCI state is determined in response to at least one of following conditions being met:
a first downlink control information (DCI) not comprising a correspondence indication field for indicating the physical shared channel and the N sets of TCI states;
the physical shared channel being transmitted before the terminal receives a second DCI comprising the correspondence indication field; and
a time offset between a third DCI and a physical downlink shared channel (PDSCH) being less than an offset threshold, wherein the third DCI is a DCI for scheduling the PDSCH.

16. The method according to claim 1, wherein each set of TCI states comprises:
a joint TCI state; or,
at least one of an uplink (UL) TCI state and a downlink (DL) TCI state.

17. The method according to claim 1, wherein the beam indication information is carried by a media access control control element (MAC CE), and the MAC CE is used to indicate the N sets of TCI states, and the N sets of TCI states correspond to one codepoint in a TCI indication field in a fourth DCI.

18. The method according to claim 1, wherein the beam indication information is carried by a media access control control element (MAC CE) and a fifth DCI, wherein the MAC CE is used to indicate the N sets of TCI states respectively corresponding to multiple codepoints in a TCI indication field in the fifth DCI, and the TCI indication field in the fifth DCI is used to indicate one codepoint of the multiple codepoints.

19. A beam indication method, performed by a network device, comprising:
sending beam indication information, wherein the beam indication information is used to indicate a unified transmission configuration indication (TCI) state of a terminal, wherein the unified TCI state comprises N sets of TCI states, wherein N is a positive integer; and
determining a default TCI state for physical shared channel transmission, wherein the default TCI state is one or more sets of TCI states of the N sets of TCI states.

20. The method according to claim 19, wherein determining the default TCI state for the physical shared channel transmission comprises:
determining the default TCI state based on a transmission mode of a physical channel.

21. The method according to claim 20, wherein in response to a transmission mode of the physical shared channel being a specified transmission mode;
the default TCI state is multiple sets of TCI states of the N sets of TCI states; or,
based on a situation of a configuration of a specified parameter for the physical shared channel, the default TCI state is one or more sets of TCI states of the N sets of TCI states.

22. The method according to claim 20, wherein in response to a transmission mode of the physical shared channel being a non-specified transmission mode;
the default TCI state is one set of TCI states of the N sets of TCI states; or,
based on a situation of a configuration of a specified parameter for the physical shared channel, the default TCI state is one or more sets of TCI states of the N sets of TCI states.

23. The method according to claim 21, wherein in response to the transmission mode of the physical shared channel being a single frequency network (SFN) scheme, the method comprises at least one of following:
in response to the terminal not supporting a dynamic SFN scheme, the default TCI state being multiple sets of TCI states of the N sets of TCI states; and
in response to the terminal supporting the dynamic SFN scheme, based on the situation of the configuration of the specified parameter for the physical shared channel, the default TCI state being one or more sets of TCI states of the N sets of TCI states.

24. The method according to claim 20, wherein in response to a transmission mode of a physical downlink control channel (PDCCH) being an SFN scheme, the method comprises at least one of following:
in response to the terminal not supporting a dynamic SFN scheme, the default TCI state being multiple sets of TCI states of the N sets of TCI states; and
in response to the terminal supporting the dynamic SFN scheme, based on a transmission mode of the physical shared channel, determining that the default TCI state is one or more sets of TCI states of the N sets of TCI states.

25. The method according to claim 24, further comprising:
sending a radio resource control (RRC) signaling, wherein the RRC signaling indicates that any control resource set (CORESET) corresponds to multiple sets of TCI states of the N sets of TCI states.

26. The method according to claim 20, wherein in response to a transmission mode of a PDCCH being an SFN scheme, the method comprises at least one of following:
in response to the terminal not supporting a dynamic SFN scheme, the default TCI state being one set of TCI states of the N sets of TCI states; and
in response to the terminal supporting the dynamic SFN scheme, based on a transmission mode of the physical shared channel, determining that the default TCI state is one or more sets of TCI states of the N sets of TCI states.

27. The method according to claim 26, further comprising:
sending an RRC signaling, wherein the RRC signaling indicates that any CORESET corresponds to one set of TCI states of the N sets of TCI states.

28. The method according to any one of claims 24 to 27, wherein in response to the terminal supporting the dynamic SFN scheme and the transmission mode of the physical shared channel being a specified transmission mode, the method comprises:
the default TCI state being one or more sets of TCI states of the N sets of TCI states; or,
based on a situation of a configuration of a specified parameter for the physical shared channel, the default TCI state being one or more sets of TCI states of the N sets of TCI states.

29. The method according to any one of claims 24 to 27, wherein in response to the terminal supporting the dynamic SFN scheme and the transmission mode of the physical shared channel being a specified transmission mode, the method comprises:
the default TCI state being one or more sets of TCI states of the N sets of TCI states; or,
based on a situation of a configuration of a specified parameter for the physical shared channel, the default TCI state being one or more sets of TCI states of the N sets of TCI states.

30. The method according to any one of claims 21-23, 28, and 29, wherein the specified transmission mode comprises at least one of following:
a frequency division multiplexing (FDM) scheme;
a time division multiplexing (TDM) scheme;
a space division multiplexing (SDM) scheme; and
a single frequency network (SFN) scheme.

31. The method according to any one of claims 21 to 30, wherein based on the situation of the configuration of the specified parameter for the physical shared channel, the default TCI state being one or more sets of TCI states of the N sets of TCI states, comprises:
in response to the physical shared channel being configured with the specified parameter, the default TCI state being multiple sets of TCI states of the N sets of TCI states; and
in response to the physical shared channel not being configured with the specified parameter, the default TCI state being one set of TCI states of the N sets of TCI states.

32. The method according to claim 19, wherein the one set of TCI states is a first set of TCI states in the unified TCI state.

33. The method according to claim 19, wherein the default TCI state is determined in response to at least one of following conditions being met:
a first downlink control information (DCI) not including a correspondence indication field for indicating the physical shared channel and the N sets of TCI states;
the physical shared channel being transmitted before the terminal receives a second DCI including the correspondence indication field; and
a time offset between a third DCI and a physical downlink shared channel (PDSCH) being less than an offset threshold, wherein the third DCI is a DCI for scheduling the PDSCH.

34. The method of claim 19, wherein each set of TCI states comprises:
a joint TCI state; or,
at least one of an uplink (UL) TCI state and a downlink (DL) TCI state.

35. The method according to claim 19, wherein the beam indication information is carried by a media access control control element (MAC CE), and the MAC CE is used to indicate the N sets of TCI states, and the N sets of TCI states correspond to one codepoint in a TCI indication field in a fourth DCI.

36. The method according to claim 19, wherein the beam indication information is carried by a media access control control element (MAC CE) and a fifth DCI, wherein the MAC CE is used to indicate the N sets of TCI states respectively corresponding to multiple codepoints in a TCI indication field in the fifth DCI, and the TCI indication field in the fifth DCI is used to indicate one codepoint of the multiple codepoints.

37. A beam indication apparatus, comprising:
a receiving module, configured to receive beam indication information, wherein the beam indication information is used to indicate a unified transmission configuration indication (TCI) state of a terminal, wherein the unified TCI state comprises N sets of TCI states, wherein N is a positive integer; and
a processing module, configured to determine a default TCI state for physical shared channel transmission, wherein the default TCI state is one or more sets of TCI states of the N sets of TCI states.

38. A beam indication apparatus, comprising:
a sending module, configured to send beam indication information, wherein the beam indication information is used to indicate a unified transmission configuration indication (TCI) state of a terminal, wherein the unified TCI state comprises N sets of TCI states, wherein N is a positive integer; and
a processing module, configured to determine a default TCI state for physical shared channel transmission, wherein the default TCI state is one or more sets of TCI states of the N sets of TCI states.

39. A beam indication device, comprising:
a processor;
a memory for storing processor-executable instructions;
wherein the processor is configured to: execute the method according to any one of claims 1 to 18.

40. A beam indication device, comprising:
a processor;
a memory for storing processor-executable instructions;
wherein the processor is configured to: execute the method according to any one of claims 19 to 36.

41. A non-transitory computer-readable storage medium, wherein instructions in the storage medium, when executed by a processor of a terminal, cause the terminal to execute the method according to any one of claims 1 to 18.

42. A non-transitory computer-readable storage medium, wherein instructions in the storage medium, when executed by a processor of a network device, cause the network device to execute the method according to any one of claims 19 to 36.
